(19) Europäisches Patentamt
European Patent Office
Office européen des brevets

(11) **EP 3 356 296 B1**

(12) **FASCICULE DE BREVET EUROPEEN**

(45) Date de publication et mention de la délivrance du brevet:
**16.10.2019 Bulletin 2019/42**

(21) Numéro de dépôt: **17737558.1**

(22) Date de dépôt: **07.07.2017**

(51) Int Cl.:
*C01F 5/14* (2006.01)        *C01F 5/16* (2006.01)
*C01F 11/00* (2006.01)       *C01F 11/02* (2006.01)
*C04B 18/02* (2006.01)       *C22B 1/24* (2006.01)
*C22B 1/242* (2006.01)       *C22B 1/243* (2006.01)
*C22B 1/244* (2006.01)       *C22B 1/245* (2006.01)
*C04B 111/00* (2006.01)

(86) Numéro de dépôt international:
**PCT/EP2017/067165**

(87) Numéro de publication internationale:
**WO 2018/007629 (11.01.2018 Gazette 2018/02)**

(54) **PROCEDE DE FABRICATION DE BRIQUETTES CONTENANT UN COMPOSE CALCO-MAGNESIEN ET UN COMPOSE A BASE DE FER, ET BRIQUETTES AINSI OBTENUES**

VERFAHREN ZUR HERSTELLUNG VON BRIKETTS MIT EINER CALCIUM-MAGNESIUM-VERBINDUNG UND EINER EISEN-BASIERTEN VERBINDUNG UND SO ERHALTENE BRIKETTS

METHOD FOR MANUFACTURING BRIQUETTES CONTAINING A CALCIUM-MAGNESIUM COMPOUND AND AN IRON-BASED COMPOUND, AND BRIQUETTES OBTAINED THEREBY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2016 BE 201605575**

(43) Date de publication de la demande:
**08.08.2018 Bulletin 2018/32**

(73) Titulaire: **S.A. Lhoist Recherche et Développement**
**1342 Ottignies-Louvain-la-Neuve (BE)**

(72) Inventeurs:
• **CRINIERE, Guillaume**
**1420 Braine-l'Alleud (BE)**
• **NISPEL, Michael**
**1348 Louvain-la-Neuve (BE)**

(74) Mandataire: **Calysta NV**
**Lambroekstraat 5a**
**1831 Diegem (BE)**

(56) Documents cités:
EP-A1- 2 199 417          EP-A1- 3 042 965
WO-A1-03/012154           WO-A1-2015/007661
US-A- 3 649 248           US-A- 5 186 742

• **BARNETT THOMAS P: "Roll-press briquetting: Compacting fines to reduce waste-handling costs", POWDER AND BULK ENGINEERING, C S C PUBLISHING, INC, US , vol. 24, no. 10 octobre 2010 (2010-10), pages 1-6, XP002742275, ISSN: 1938-9140 Extrait de l'Internet: URL:http://www.powderbulk.com/wp-content/uploads/pdf/pbe_201010_058.pdf [extrait le 2015-07-15] cité dans la demande**
• **E A S GARICA ET AL: "PELOTIZAÇÃO DE FINOS DE CALCÁRIO UTILIZANDO ÁGUA E CAL VIRGEM COMO AGENTES AGLOMERANTES AGLOMERANTES", XXVI ENCONTRO NACIONAL DE TRATAMENTO DE MINÉRIOS E METALURGIA EXTRATIVA, vol. 1, 2015, pages 59-67, XP055349510, Poços de Caldas**

**Description**

La présente invention se rapporte à un procédé de fabrication d'une composition sous forme de briquettes contenant un composé calco-magnésien vif et un composé à base de fer, à des briquettes crues contenant le composé calco-magnésien vif et de l'oxyde de fer, à des briquettes cuites contenant le composé calco-magnésien vif et des ferrites de calcium ainsi qu'à leur utilisation.

Par les termes composé calco-magnésien vif, on entend au sens de la présente invention une matière solide minérale dont la composition chimique est principalement de l'oxyde de calcium et/ou de l'oxyde de magnésium. Les composés calco-magnésiens vifs au sens de la présente invention comprennent donc la chaux vive (chaux calcique), la chaux magnésienne vive, la chaux dolomitique vive ou de la dolomie calcinée vive. Les composés calco-magnésiens vifs contiennent des impuretés, à savoir, des composés tels de la silice, $SiO_2$ ou encore de l'alumine, $Al_2O_3$, etc..., à hauteur de quelques pour-cents. Il est entendu que ces impuretés sont exprimées sous les formes précitées mais peuvent en réalité apparaître sous des phases différentes. Elle contient également en général quelques pour-cents de $CaCO_3$ résiduel ou $MgCO_3$, appelés incuits, et quelques pour-cents de $Ca(OH)_2$ ou $Mg(OH)_2$ résiduels, du fait de l'hydratation partielle des produits vifs lors des phases de refroidissement, de manipulation et/ou de stockage.

On entend par chaux vive, une matière solide minérale, dont la composition chimique est principalement de l'oxyde de calcium, $CaO$. La chaux vive est communément obtenue par calcination de calcaire, principalement constitué de $CaCO_3$. La chaux vive contient des impuretés, à savoir, des composés tels de l'oxyde de magnésium, $MgO$, de la silice, $SiO_2$ ou encore de l'alumine, $Al_2O_3$, etc..., à hauteur de quelques pour-cents. Il est entendu que ces impuretés sont exprimées sous les formes précitées mais peuvent en réalité apparaître sous des phases différentes. Elle contient également en général quelques pour-cents de $CaCO_3$ résiduel, appelés incuits, et quelques pour-cents de $Ca(OH)_2$ résiduel, du fait de l'hydratation partielle de l'oxyde de calcium $CaO$ lors des phases de refroidissement, de manipulation et/ou de stockage.

Selon la présente invention, on entend par le terme « briquette » un compact ayant une forme oblongue, présentant une masse d'environ 5 à 100 g par briquettes, inscrit dans un ellipsoïde de révolution aplati ou allongé (en anglais oblate ellipsoid of révolution or prolate ellipsoid of révolution). Typiquement, les briquettes présentent une forme de savonnette ou sont qualifiées de briquettes « oeuf » (en anglais « egg briquettes »)

Par opposition, on distingue les tablettes qui sont typiquement sous forme de pastilles, telles que produites par les presses « Titan » de la société « Eurotab ». Par définition, les tablettes à usage industriel sont de formes régulières, plus particulièrement sous forme de cylindre de faible hauteur.

Des briquettes sont connues de l'état de la technique, voir par exemple le document WO2015007661. Selon ce document, des compacts (à savoir des briquettes ou des tablettes) sont décrits comprenant des particules de composé calco-magnésien comprenant au moins 50% de composé calco-magnésien vif. Les compacts (sous forme de briquettes ou de tablettes) divulgués peuvent aussi contenir des additifs, en particulier de l'oxyde de fer.

Selon ce document, la résistance mécanique à la chute est mesurée au moyen d'un shatter test. Les compacts décrits présentent de manière générale un indice de Shatter test inférieur à 10%.

Par les termes « indice de Shatter test », on entend au sens de la présente invention, le pourcentage massique des fines inférieures à 10 mm générées à l'issue de 4 chutes de 2 m au départ de 10kg de produit. Ces fines sont quantifiées au moyen d'un tamisage au travers un crible à mailles carrées de 10 mm à l'issue des 4 chutes de 2 m.

Une analyse détaillée des exemples et contre-exemples de ce document indique que des tablettes crues présentant une résistance mécanique à la chute améliorée ont été obtenues à l'aide d'au moins 50% de produits vifs, et que ces tablettes présentent également une résistance au vieillissement en atmosphère humide. Par contre, lorsque des briquettes de composés vifs sont obtenues à l'aide de composés vifs, l'indice de shatter test représentant la résistance mécanique reste élevé (entre 13 et 15%) et il est nécessaire de réaliser un traitement thermique si l'on veut atteindre un indice de shatter test inférieur à 10%.

Le document US5186742 divulgue des briquettes de chaux contenant de 55 à 85 % en poids de chaux, de 10 à 40% en poids de cendres et de 0,1 à 10% en poids de fibres de papier ainsi qu'éventuellement un lubrifiant. Les briquettes divulguées dans le document US 5186742 sont testées pour leur résistance à la chute, test qui n'est pas comparable au test permettant de mesure l'indice de Shatter test et présentent une résistance à la compression entre 150 et 300 livres (pounds), ce qui correspond à un indice de Shatter test bien supérieur à 10%.

Les composés calco-magnésiens s'utilisent dans de nombreuses industries, comme par exemple la sidérurgie, le traitement des gaz, le traitement des eaux et des boues, l'agriculture, l'industrie du bâtiment, les travaux publics et autres. Ils peuvent s'utiliser soit sous forme de galets ou de morceaux, soit sous forme de fines (d'une taille généralement inférieure à 7 mm). Dans certaines industries, la forme de galet est néanmoins préférée.

C'est le cas, par exemple, dans la sidérurgie, lors de l'adjonction de composés de calcium et de magnésium dans des convertisseurs d'oxygène ou bien des fours à arc électrique.

Durant la production de ces galets et morceaux, de nombreuses fines sont générées. Ces fines présentent typiquement un potentiel d'utilisation restreint car elles sont difficiles à transporter et à manipuler.

Depuis plusieurs années, l'objectif, dans nombre de secteurs, est de transformer des composés initialement sous forme de poudre en briquettes pour faciliter et sécuriser leur transport, leur manipulation et leur utilisation.

Les chaufourniers maintiennent toujours un équilibre des matières entre les composés calco-magnésiens en galet et les fines générées avant et pendant la calcination ainsi que lors des manipulations et opérations ultérieures. Néanmoins dans certains cas, un excédent de fines est produit. Ces fines peuvent alors être agglomérées les unes aux autres sous forme de briquettes ou similaires, ce qui donne non seulement la possibilité d'éliminer les fines en excédent mais également d'augmenter artificiellement la production de composés de calcium et de magnésium en galet en ajoutant ces briquettes ou analogues aux galets.

Le document de Barnett et al (Roll-press briquetting : Compacting fines to reduce waste-handling costs, powder and bulk engineering, vol.24, n° 10, octobre 2010, 1-6) décrit un procédé de fabrication de briquettes crues de chaux. Toutefois, ce document est muet quant aux conditions de production ainsi que sur les propriétés mécaniques de briquettes obtenues.Les briquettes à base d'excédent de fines ou analogues ont généralement une résistance mécanique inférieure à celle des composés de calcium et de magnésium en galet. Elles ont également une résistance au vieillissement pendant leur stockage ou leur manipulation qui est nettement inférieure à celle des composés de calcium et de magnésium en galet.

Cela explique le fait que dans la pratique, le briquetage des fines de composés de calcium et de magnésium ne soit pas très utilisé à l'heure actuelle. Compte tenu de la faible qualité des briquettes formées par ce type de procédé, on estime que le briquetage procure un rendement inférieur à 50 %, du fait de la présence d'un très grand nombre de briquettes inutilisables en sortie de ce type de procédé, qui nécessite une étape de recyclage.

Les lubrifiants et les liants sont des additifs souvent utilisés dans les procédés d'agglomération sous forme de briquettes ou similaires.

Les lubrifiants peuvent être de deux types, internes ou externes. Les lubrifiants internes sont mélangés intimement aux matériaux à briqueter. Ils favorisent d'une part la coulabilité du mélange lors de l'alimentation de la briqueteuse et d'autre part le réarrangement des particules au sein du mélange lors de la compression. Les lubrifiants externes sont appliqués sur les surfaces des rouleaux de la briqueteuse et aident principalement au démoulage. Dans les deux cas, ils réduisent le frottement sur la surface et donc l'usure. Les lubrifiants peuvent être des liquides tels que des huiles minérales, des silicones, etc. ou bien des solides tels que le talc, le graphite, les paraffines, les stéarates, etc. Dans le cas des compositions à base de composés calco-magnésiens vifs, les stéarates sont préférés et plus particulièrement le stéarate de calcium ou le stéarate de magnésium.

Les liants sont des substances ayant la propriété d'agglomérer les particules entre elles, soit par des forces d'adhésion, soit par une réaction chimique. Ils peuvent être d'origine minérale (ciments, argiles, silicates...), d'origine végétale ou animale (celluloses, amidons, gommes, alginates, pectine, colles,...), d'origine synthétique (polymères, cires,...). Dans bien des cas, ils sont utilisés et mis en oeuvre avec de l'eau qui active leurs propriétés d'agglomération.

Au fil des années, on a utilisé plusieurs de ces additifs pour augmenter la résistance et la durabilité des briquettes ou similaires de composés de calcium et de magnésium (calco-magnésien), par exemple le stéarate de calcium ou les fibres de papier (voir par exemple US5186742), mais sans que cela conduise à des améliorations suffisantes. D'ailleurs, dans de nombreux cas, l'utilisation des additifs actuellement employés pour d'autres produits industriels façonnés est limitée, comme c'est le cas notamment pour la fabrication des briquettes de composés calco-magnésiens, soit parce que les composés calco-magnésiens réagissent violemment avec l'eau, soit à cause d'un effet potentiellement négatif de ces additifs sur l'usage final des briquettes de composés calco-magnésiens.

Dans de nombreux procédés de raffinage sidérurgique, une composition de composés calco-magnésiens vifs, comme de la chaux vive et/ou de la dolomie vive ainsi que de la ferraille sont introduites dans un convertisseur pour contrôler la cinétique et la chimie de la réaction de formation de laitier, en facilitant ainsi l'élimination des impuretés et en protégeant le revêtement réfractaire du four vis-à-vis d'une usure excessive.

Les composés calco-magnésiens vifs introduits flottent sur le bain de métal chaud en formant ainsi une interface.

Durant le raffinage, le métal fondu est introduit dans la cuve dans laquelle de la ferraille peut aussi être introduite.

Le métal fondu provenant de la fusion de composés métalliques comprend une teneur initiale en carbone typiquement de 40 à 45 kg par tonne de métal fondu et une teneur initiale en phosphore de 0,7 à 1,2 kg par tonne de métal fondu.

Les composés calco-magnésiens vifs sont chargés et flottent au-dessus du bain de métal fondu. De l'oxygène est insufflé pendant une période de temps prédéterminée, afin de brûler le carbone et d'oxyder directement et/ou indirectement les composés phosphorés, et le silicium. Durant l'insufflation, les composés calco-magnésiens sont immergés dans le bain de métal fondu et se dissolvent/fondent légèrement à l'interface avec le métal fondu, les composés calco-magnésiens flottant toujours.

Le laitier est la couche d'oxydes flottant au-dessus du bain et résulte de la formation de $SiO_2$ due à l'oxydation du silicium, de la formation d'autres oxydes (MnO et FeO) durant l'insufflation, de l'addition de composés calco-magnésiens vifs pour neutraliser l'action du $SiO_2$ sur le revêtement réfractaire et pour liquéfier et activer le laitier, et du MgO provenant de l'usure du revêtement réfractaire.

En fait, durant la conversion, il se produit une réaction métal/gaz dans laquelle le carbone est brûlé pour former du CO et du $CO_2$ gazeux. A la fin de la période prédéterminée de l'insufflation, la teneur en carbone est réduite à environ 0,5 kg par tonne de métal fondu, ce qui signifie environ 500 ppm.

A l'interface entre le métal fondu et les composés calco-magnésiens flottants, il se produit une réaction métal/laitier destinée à déphosphorer le métal fondu. A la fin de la réaction entre le laitier et le métal, la teneur en phosphore est d'environ 0,1 kg ou moins par tonne de métal fondu, ce qui signifie environ 100 ppm ou moins.

Si le métal est le fer et que le composé calco-magnésien est de la chaux calcique, la réaction chimique est la suivante :

$$5 \text{ FeO} + 4 \text{ CaO} + 2P \leftrightarrows 4 \text{ CaO}. P_2O_5 + 5 \text{ Fe}$$

Le FeO (oxyde de fer) et le phosphore proviennent du métal chaud, tandis que le CaO est ajouté dans le convertisseur. Cette réaction est exothermique et le but est de déplacer l'équilibre vers le côté droit. Ceci peut être effectué par réduction de la température, fluidisation du laitier autant que possible, homogénéisation du bain métallique (effectuée par insufflation d'argon et/ou d'azote par le fond dans la plupart des cas), maintien de l'indice de basicité $CaO/SiO_2$ entre 3 et 6 (rapport en poids de l'oxyde de calcium à la silice qui est acide), maintien du niveau de magnésite à moins de 9 % dans le laitier, et création de quantités suffisantes de laitier.

La magnésite est typiquement présente dans le laitier et provient de l'usure du revêtement réfractaire, qui peut être réduite par l'addition contrôlée de dolomie vive. Toutefois, pour favoriser la cinétique de la réaction dans le laitier, le niveau de magnésite devrait être maintenu inférieur à 9 %.

Comme on peut le comprendre, le raffinage du métal chaud n'est pas si facile, et il faudrait réaliser son optimisation pour obtenir une quantité donnée de métal liquide, par action sur l'équilibre massique du métal, une analyse chimique donnée, par action sur l'équilibre massique de l'oxygène (réaction d'oxydation), et une température donnée à la fin de l'insufflation (action sur l'équilibre thermique).

La complexité de l'amélioration de la déphosphoration durant le raffinage de métal chaud est due, entre autres, au respect simultané des trois équilibres.

Un tel procédé de déphosphoration durant le raffinage est connu dans la technique d'après le document "Process for dephosphorization of steel in Linz Donawitz converter (BOF converter) by pellet addition" (IN01412MU2006 A).

Ce brevet se focalise sur l'amélioration de la déphosphoration lors d'un procédé dans un convertisseur par refroidissement du laitier dans la deuxième moitié du procédé.

Toutefois, malheureusement, le procédé divulgué requiert une étape additionnelle dans le procédé pour introduire les roches dans le convertisseur après le chargement des additifs minéraux et du caloporteur standard. Ceci augmente par conséquent la durée du procédé, ce qui ne constitue pas une solution acceptable pour l'industrie du raffinage, puisque chaque seconde au cours d'un tel procédé de raffinage est très coûteuse.

Un autre procédé d'élimination du phosphore est connu d'après le document Slag-Making Methods And Materials, brevet US 3 771999. Ce brevet se focalise sur l'amélioration de la déphosphoration dans le procédé utilisant un convertisseur, par utilisation de produits à base de chaux en briquettes ayant 0,5 à 15 % de $CaCl_2$, NaCl, KCl et/ou $NaF_2$.

De plus, l'addition à de la chaux de fondants tels que les oxydes de fer, les oxydes de manganèse, le carbone, $CaF_2$, l'oxyde de bore, durant le procédé de raffinage, s'est avérée dans l'état de la technique améliorer la qualité du procédé de raffinage, par exemple pour la déphosphoration du métal fondu.

Toutefois, l'addition de tels fondants crée typiquement une complexité additionnelle du procédé de raffinage.

Il existe donc un besoin de fournir des composés calco-magnésiens vifs contenant des fondants, en particulier de l'oxyde de fer.

Des briquettes de composés calco-magnésiens vifs contenant éventuellement des fondants sont connues. Toutefois, dans les composés calco-magnésiens connus, contenant des fondants, il est également rapporté un phénomène d'efflorescence problématique car l'insufflation entraîne alors les parties efflorées dans les fumées (voir US3649248). D'autres part, il est également apparu que lorsque de l'oxyde de fer est ajouté comme fondant, celui-ci doit se transformer en ferrite, lequel joue alors un rôle dans l'accélération de la formation de laitier.

Toutefois, bien que cela semble simple sur papier, l'oxyde de fer transformé en ferrite reste bien souvent négligeable, ne jouant alors pas son rôle dans l'accélération de la formation de laitier, ce qui contraint les aciéristes à ajouter la chaux d'une part, éventuellement avec du fer et d'autre part du ferrite, éventuellement avec de la chaux.

La formation des ferrites de calcium demande des températures relativement élevées (typiquement 1200-1250°C) et des temps de traitement thermique assez longs (voir également US3649248). Les briquettes à base de chaux vive (dolomitique) et oxyde de fer décrits dans l'art antérieur ne conduisent donc pas facilement à la formation des ferrites de calcium.

Ainsi, lorsqu'un tel traitement thermique est mis en oeuvre en amont du convertisseur, le point de vue technico-économique est pénalisé (four spécifique, consommation énergétique, perte de capacité de production, frittage partiel, i.e. réduction de la surface spécifique et réduction du volume poreux).

Lorsque le traitement thermique est mis en oeuvre in-situ dans le convertisseur, la cinétique de formation des ferrites de calcium est trop lente et pénalise la performance de ces briquettes pour la déphosphoration.

Par conséquent, il n'existe pas encore actuellement un produit simple à utiliser, peu contraignant, et qui minimise la perte de chaux.

La présente invention vise à résoudre au moins une partie de ces inconvénients en mettant à disposition un procédé permettant de réduire considérablement la perte de chaux et d'améliorer l'efficacité de la chaux dans la formation du laitier.

Pour résoudre ce problème, il est prévu suivant l'invention un procédé de fabrication d'une composition calco-magnésienne sous forme de briquettes, comprenant les étapes suivantes :

i. amenée d'un mélange pulvérulent homogène comprenant au moins un composé calco-magnésien vif, ledit mélange comprenant au moins 40 % en poids d'équivalent CaO+MgO par rapport au poids de ladite composition et présentant un ratio molaire Ca/Mg supérieur ou égal à 1, de préférence supérieur ou égal à 2, plus particulièrement supérieur ou égal à 3;

ii. alimentation d'une presse à rouleaux avec ledit mélange pulvérulent homogène,

iii. compression dans ladite presse à rouleaux dudit mélange pulvérulent homogène, avec obtention d'une composition calco-magnésienne sous forme de briquettes crues et,

iv. collecte desdites briquettes crues.

Ce procédé est caractérisé en ce que ledit mélange pulvérulent homogène comprend en outre un composé à base de fer présent à une teneur d'au moins 12%, plus préférablement au moins 20%, de manière préférée au moins 30%, plus préférablement au moins 35% en poids d'équivalent $Fe_2O_3$ par rapport au poids de ladite composition, ledit composé à base de fer présentant une distribution granulométrique très fine caractérisée par une taille médiane $d_{50}$ inférieure à 100 $\mu$m, préférablement 50 $\mu$m ainsi qu'une taille $d_{90}$ inférieure à 200 $\mu$m, de préférence inférieure à 150 $\mu$m, préférablement inférieure à 130 $\mu$m, plus préférablement inférieure à 100 $\mu$m et en ce que lesdits rouleaux de la presse à rouleaux développent des vitesses linéaires en périphérie des rouleaux comprises entre 10 et 100 cm/s, préférentiellement comprises entre 20 et 80 cm/s, et des pressions linéaires comprises entre 60 et 160 kN/cm, préférentiellement comprises entre 80 et 140 kN/cm, et de manière encore plus préférentielle comprises entre 80 et 120 kN/cm.

Dans une forme particulière de l'invention, ledit mélange pulvérulent comprend au plus 97 % en poids, de préférence au plus 90 % en poids, de manière préférée, au plus 88%, dans certaines forme de réalisation, au plus 60% en poids d'équivalent CaO+MgO par rapport au poids de ladite composition.

Eventuellement, dans le procédé selon la présente invention, l'étape i. s'effectue en présence d'un liant ou d'un lubrifiant, de préférence sous forme de poudre ou de suspension aqueuse concentrée, plus particulièrement choisi dans le groupe constitué des liants d'origine minérale tels que les ciments, les argiles, les silicates, des liants d'origine végétale ou animale, tels que les celluloses, les amidons, les gommes, les alginates, la pectine, les colles, des liants d'origine synthétique, tels que les polymères, les cires, des lubrifiants liquides tels que des huiles minérales ou des silicones, des lubrifiants solides tels que le talc, le graphite, les paraffines, les stéarates, en particulier le stéarate de calcium, le stéarate de magnésium et leurs mélanges, de préférence du stéarate de calcium et/ou du stéarate de magnésium, à une teneur comprise entre 0,1 et 1 % en poids, de préférence entre 0,15 et 0,6 % en poids, de manière plus préférentielle entre 0,2 et 0,5 % en poids par rapport au poids total desdites briquettes.

La détermination des % en poids d'équivalent CaO + MgO, mais aussi $Fe_2O_3$ est réalisée par spectrométrie de fluorescence des rayons X (XRF) comme décrit dans la norme EN 15309. L'analyse chimique, semi-quantitative, par XRF pour déterminer la concentration massique relative des éléments dont la masse atomique est comprise entre 16 (oxygène) et 228 (uranium) est réalisée au départ des échantillons broyés à 80$\mu$m et mis en forme sous forme de pastille. Les échantillons sont introduits dans un appareillage PANalytical/MagiX PRO PW2540, fonctionnant en dispersion de longueur d'ondes. La mesure est réalisée avec une puissance de 50kV et 80 mA, avec un détecteur Duplex.

Les résultats de l'analyse donnent la teneur en Calcium, en Magnésium et en Fer et ces mesures sont rapportées en poids d'équivalent CaO et MgO, et en poids d'équivalent $Fe_2O_3$.

Selon la présente invention, il a en effet été constaté que contrairement aux compositions connues, dans les briquettes selon la présente invention, d'une part grâce au fait que le mélange formé est homogène, mais d'autre part, également par la grande quantité du composé à base de fer présente sous la forme d'oxyde de fer, une grande quantité d'oxyde de fer était convertie en ferrite de calcium, après traitement thermique.

Pourtant, bien que dans les compositions connues, il était identifié que la granulométrie de l'oxyde de fer n'était pas adaptée, souvent trop grosse, l'homme de métier sait aussi que l'utilisation de poudres fines dans des procédés de mise en forme par briquetage va à l'encontre des bonnes pratiques pour l'homme de métier puisqu'elles dégradent les propriétés d'écoulement du mélange et donc l'alimentation des presses.

La distribution granulométrique du composé à base de fer qui est mis en oeuvre dans le procédé est déterminée par granulométrie laser. La mesure est donc basée sur la diffraction de la lumière et suit les théories de Fraunhofer et de Mie.

Notamment, on considère que les particules sont sphériques non poreuses et opaques. La mesure est réalisée selon la norme ISO 13320 dans du méthanol, sans sonication.

De plus, il a été mis en évidence selon la présente invention que ce n'est pas uniquement la granulométrie qui permet d'atteindre un taux de conversion suffisant après traitement thermique ou dans les convertisseurs, mais plutôt qu'il faut pouvoir disposer d'un oxyde de fer actif lorsqu'il est mis en oeuvre avec les composés calco-magnésiens vifs sous forme de briquette.

Par les termes un composé à base de fer, on entend par exemple un composé à base de fer, de préférence à base d'oxyde de fer, caractérisé par une taille médiane dso inférieure à 100 $\mu$m, préférablement 50 $\mu$m ainsi qu'une taille $d_{90}$ inférieure à 200 $\mu$m, de préférence inférieure à 150 $\mu$m, préférablement inférieure à 130 $\mu$m, plus préférablement inférieure à 100 $\mu$m. On peut alors qualifier cet oxyde de fer de fer actif, ce qui sous-entend en particulier qu'il y ait, par rapport à la quantité totale d'oxyde de fer présente dans le composé à base de fer, au moins 40 % de cet oxyde de fer présent dans la couche périphérique des grains du composé à base de fer, cette couche périphérique étant définie par une épaisseur de 3 $\mu$m. On définit de cette façon une fraction volumique d'oxyde de fer en surface des particules d'oxyde de fer, laquelle est susceptible de réagir pour être convertie en ferrite durant un traitement thermique ou bien directement in situ dans le convertisseur.

Il est également prévu selon l'invention que le composé à base de fer soit sous forme d'un mélange de composé à base de fer, lequel mélange de composés à base de fer pouvant comprendre un ou plusieurs oxyde de fer, lequel peut comprendre à son tour 50 % en poids, de préférence 60% en poids, préférentiellement 70% en poids d'oxyde de fer actif par rapport au poids total dudit composé à base de fer.

La distribution granulométrique du composé à base de fer dans la composition sous forme de briquette est déterminée par microscopie électronique à balayage et cartographie X, couplée à de l'analyse d'image.

La mesure est basée sur la propriété des particules du composé à base de fer d'émettre, lorsqu'elles sont soumises à un rayonnement à haute énergie (par exemple, un faisceau d'électrons à haute intensité), un rayonnement X d'énergie spécifique (6.398 keV). La détection de ce rayonnement, couplée à la connaissance exacte de la position du faisceau d'électrons pour chaque point observé, permet de cartographier spécifiquement les particules du composé à base de fer.

Chaque particule identifiée est ensuite caractérisée par son diamètre de particule à surface équivalente ($X_{a,i}$), tel que défini dans la norme ISO 13322-1. Les particules sont ensuite regroupées par fraction granulométrique de taille de particules.

Dans les conditions particulières mentionnées ci-avant, la fraction de fer actif au sens de l'invention est dans la couche périphérique de chaque particule du composé à base de fer, dans la couche extérieure d'une épaisseur de 3 $\mu$m. Pour chaque fraction granulométrique et donc pour chaque taille de particule, on peut donc calculer la fraction du fer dans la couche périphérique par la formule :

$$\%Fe_{actif/particule} = (V_{ext} - V_{int})/V_{ext}$$

où $V_{ext}$ est le volume de la particule du composé à base de fer et $V_{int}$ le volume au coeur de la particule à plus de 3 $\mu$m de la surface, c'est-à-dire le volume correspondant à une particule sphérique présentant un rayon réduit de 3 $\mu$m.

Les particules étant considérées comme parfaitement sphériques, on obtient la formule suivante pour les particules dont le diamètre est supérieur à 6 $\mu$m :

$$\%Fe_{actif/particule>6\mu m} = [(D_{ext})^3 - (D_{ext} - 6)^3]/(D_{ext})^3$$

où $D_{ext}$ est le diamètre de la particule exprimée en $\mu$m, ou encore la taille de la particule au sens de la granulométrie laser.

On obtient la formule suivante pour les particules dont le diamètre est inférieur à 6 $\mu$m :

$$\%Fe_{actif/particule<6\mu m} = 100\%$$

La fraction de fer actif total au sens de l'invention est donc la somme sur toutes les fractions granulométriques de la fraction de fer actif multiplié par le pourcentage volumique de chaque fraction granulométrique obtenu par granulométrie laser

$$\%Fe_{actif} = \sum \%_{volumique/particule} \cdot \%Fe_{actif/particule}$$

Par conséquent, pour avoir suffisamment d'oxyde de fer actif dans le composé à base de fer présent dans les briquettes produites par le procédé selon la présente invention, il faut que le % de fer actif soit d'au moins 40%.

Comme on peut le constater, suivant la présente invention, avoir une granulométrie fine ne suffit pas, il faut réellement atteindre le % d'oxyde de fer actif au sein du composé à base de fer présent dans les briquettes, ce qui permet d'atteindre une conversion en ferrite suffisante durant un traitement thermique préalable ou dans un convertisseur.

De plus, dans le procédé selon la présente invention, il a été constaté qu'un tel oxyde de fer actif ne pénalisait pas la résistance mécanique des briquettes formées, même à une teneur élevée de 60% en poids par rapport au poids total des briquettes crues.

La formation de telles briquettes crues contenant une quantité élevée d'oxyde de fer permet en outre de disposer de briquettes apportant simultanément les fondants comme l'oxyde de fer ($Fe_2O_3$), mais également les ferrites requis, dès lors que si les briquettes sont crues et qu'elles ne contiennent pas directement de ferrites, les ferrites peuvent être formés directement in situ, par exemple dans les convertisseurs dans lesquelles les briquettes sont utilisées.

Le procédé selon la présente invention permet donc l'obtention de briquettes de composé calco-magnésiens dont la résistance mécanique n'est pas pénalisée par l'ajout de fondants, même sans traitement thermique pour des teneurs en oxyde de fer inférieures à 40% en poids de la composition de briquette crue, dont l'oxyde de fer présente une distribution granulométrique très fine caractérisée par une taille médiane dso inférieure à 100 $\mu$m, préférablement 50 $\mu$m ainsi qu'une taille $d_{90}$ inférieure à 200 $\mu$m, de préférence inférieure à 150 $\mu$m, préférablement inférieure à 130 $\mu$m, plus préférablement inférieure à 100 $\mu$m, et qui en outre est très flexible et performant, sans apporter les contraintes susdites.

Au sens de la présente invention, ledit un composé à base de fer peut-être formé d'un ou plusieurs composés à base de fer, totalisant ensemble dans la composition une teneur d'au moins 12%, plus préférablement d'au moins 20%, de manière préférée d'au moins 30%, plus préférablement d'au moins 35% en poids.

Dans un autre mode de réalisation préféré selon l'invention, ledit un composé à base de fer présente une distribution granulométrique caractérisée par un dso inférieur ou égal à 80 $\mu$m, de préférence inférieur ou égal à 60 $\mu$m.

Au sens de la présente invention, sauf s'il en est précisé autrement, la notation $d_x$ représente un diamètre exprimé en $\mu$m, mesuré par granulométrie laser dans le méthanol sans sonication, par rapport auquel x% en volume des particules mesurées sont inférieures ou égales.

Dans une forme de réalisation particulière, le procédé selon la présente invention comprend en outre un traitement thermique desdites briquettes crues collectées à une température comprise entre 900°C et 1200°C, de préférence comprise entre 1050 °C et 1200°C inclus, plus préférablement entre 1100°C et 1200°C inclus. Le temps de traitement thermique est réalisé de préférence pendant une durée prédéterminée comprise entre 3 et 20 minutes, de préférence supérieure ou égale à 5 minutes et inférieure ou égale à 15 minutes, avec formation et obtention de briquettes cuites, dans lesquelles ledit oxyde de fer est converti en ferrite de calcium, c'est-à-dire de briquettes cuites comprenant un composé calco-magnésien vif et un composé à base de fer comprenant au moins du ferrite de calcium, le composé à base de fer comprenant au moins du ferrite de calcium étant présent à une teneur d'au moins 12%, plus préférablement au moins 20%, de manière préférée au moins 30%, plus préférablement au moins 35% en équivalent $Fe_2O_3$.

Lorsque le traitement thermique est réalisé en condition « multicouche », c'est-à-dire que les briquettes sont sous la forme d'un lit statique de briquettes d'une certaine épaisseur, on comprend que le temps de traitement thermique peut être augmenté pour laisser le temps à la chaleur de pénétrer au coeur du lit de briquettes. Dans des conditions de températures inférieures ou égales à 1200°C, le traitement thermique permet d'obtenir des briquettes cuites comprenant un composé calco-magnésien et un composé à base de fer contenant du ferrite de calcium, dont la porosité et la surface spécifique n'est pas ou peu altérée et dont la résistance mécanique s'en trouve améliorée. En autres mots, on évite à ces températures le phénomène de frittage des briquettes. Ces caractéristiques de porosité relativement élevées permettent une dissolution rapide des briquettes cuites dans le laitier dans un procédé de raffinage métallurgique.

De cette manière, il a été observé que des briquettes obtenues par le procédé selon la présente invention présentent non seulement une teneur en ferrite de calcium suffisamment élevée, mais que les briquettes présentent une résistance mécanique représentée par l'indice de Shatter test particulièrement intéressante.

En effet, dans certaines formes de réalisation du procédé selon la présente invention, les briquettes cuites présentent un indice de Shatter test inférieur à 8%, parfois inférieur à 6%, inférieur à 4%, inférieur à 3%, voire même autour de 2%.

Ceci signifie que selon la présente invention, on parvient à produire des briquettes très résistantes, dont la perte due aux briquettes brisées ou à la formation de fines durant leur transport est réduit de manière significative et qu'il est possible de contrecarrer les inconvénients des briquettes connues, lesquelles génèrent bien souvent une perte allant jusqu'à plus de 20 % de chaux vive en raison de la génération de fines durant le transport vers l'atelier de préparation d'acier et en raison de la manipulation et du transport à l'intérieur de l'atelier de préparation d'acier.

Dans encore une forme de réalisation particulièrement avantageuse, ledit composé calco-magnésien vif est un composé calco-magnésien à cuisson douce ou moyenne, de préférence à cuisson douce.

En effet, dans le procédé selon la présente invention, il est avantageux que le composé calco-magnésien amené sous forme de mélange homogène, soit lui aussi suffisamment réactif, de manière à former avec le composé à base de fer des briquettes cohésives après traitement thermique . De plus, à l'utilisation dans les convertisseurs pour former du laitier, il est avantageux que le composé calco-magnésien vif soit suffisamment réactif.

Les composés calco-magnésiens vifs, tels que la chaux vive sont industriellement produits par cuisson de calcaires naturels dans différents types de fours tels que des fours droits (fours régénératifs à double flux, fours annulaires, fours droits standard...) ou bien encore des fours rotatifs. La qualité du composé calco-magnésien, tel que par exemple de la chaux vive, notamment sa réactivité à l'eau, et la consistance de cette qualité, sont en partie liées au type de four utilisé, aux conditions d'utilisation du four, à la nature du calcaire dont est issu le composé calco-magnésien vif en lui-même, ou bien encore à la nature et à la quantité du combustible utilisé. Ainsi, il est théoriquement possible de produire toute une gamme de composés calco-magnésiens vifs, comme par exemple de chaux vive avec des réactivités à l'eau allant des plus explosives aux plus lentes.

Avantageusement, ledit composé calco-magnésien vif est de la chaux vive.

En général, l'obtention d'une chaux vive par une cuisson douce (900-1000°C) permet d'obtenir une chaux plutôt réactive alors que l'obtention d'une chaux peu réactive passe par une sur-cuisson à plus haute température (1200-1400°C). La sur-cuisson conduit bien souvent à produire une chaux vive de qualité moins stable en termes de réactivité à l'eau car l'opération de calcination est réalisée dans une zone thermique où l'évolution texturale de la chaux vive est assez sensible. Cette chaux vive sur-cuite est par ailleurs plus chère à produire qu'une chaux vive plus douce car elle nécessite d'utiliser des températures plus élevées mais aussi parce que, sauf à utiliser des fours dédiés, la production de cette chaux vive sur-cuite conduit à des inter-campagnes de production pour alterner avec la production des chaux vives douces qui sont plus couramment utilisées, ce qui n'est pas sans poser des problèmes de stabilisation des conditions de calcination et donc des problèmes de stabilisation de la qualité.

Les chaux vives obtenues par cuisson douce présentent en général des surfaces spécifiques mesurées par manométrie d'adsorption d'azote après dégazage sous vide à 190°C pendant au moins 2 heures et calculée selon la méthode BET multi-points telle que décrite dans la norme ISO 9277:2010E supérieures à 1 $m^2/g$ alors que les chaux vives sur-cuites présentent en général des surfaces bien inférieures à 1 $m^2/g$.

Dans le cadre de cette invention, la réactivité de la chaux vive est mesurée en utilisant le test de réactivité à l'eau de la norme européenne EN 459-2 :2010 E. Ainsi, 150g de chaux vive sont ajoutés sous agitation dans un Dewar cylindrique de 1.7$dm^3$ de capacité contenant 600$cm^3$ d'eau permutée à 20°C. La chaux vive est amenée sous la forme de fines de taille comprise entre 0 et 1 mm. L'agitation à 250 tours par minute est réalisée au moyen d'une pâle spécifique. L'évolution de la température est mesurée en fonction du temps, ce qui permet de tracer une courbe de réactivité. On peut déduire de cette courbe la valeur $t_{60}$ qui est le temps nécessaire pour atteindre 60°C.

La réactivité de la dolomie cuite est mesurée en utilisant ce même test de réactivité. Dans ce cas, 120g de dolomie cuite sont ajoutés sous agitation dans un Dewar cylindrique de 1.7$dm^3$ de capacité contenant 400$cm^3$ d'eau permutée à 40°C. La dolomie cuite est amenée sous la forme de fines de taille comprise entre 0 et 1 mm. L'agitation à 250 tours par minute est réalisée au moyen d'une pâle spécifique. L'évolution de la température est mesurée en fonction du temps, ce qui permet de tracer une courbe de réactivité. On peut déduire de cette courbe la valeur $t_{70}$ qui est le temps nécessaire pour atteindre 70°C.

La composition selon la présente invention comprend un composé calco-magnésien à cuisson douce ou moyenne, de préférence douce qui est donc forcément relativement réactif fournissant ainsi des briquettes réactives.

Selon la présente invention, un composé calco-magnésien à cuisson douce ou moyenne, de préférence douce, est caractérisé par une valeur $t_{60}$ inférieur à 10 min, préférentiellement 8 min, préférentiellement 6 min, et encore préférentiellement 4 min lorsque le composé calco-magnésien est une chaux vive et par une valeur de $t_{70}$ inférieur à 10 min, préférentiellement 8 min, préférentiellement 6 min, et encore préférentiellement 4 min lorsque le composé calco-magnésien est une dolomie cuite.

Dans une forme de réalisation particulière du procédé selon la présente invention, le procédé comprend, avant ladite amenée d'un mélange pulvérulent:

> i. une alimentation d'un mélangeur avec au moins 40% en poids d'un composé calco-magnésien vif exprimé en équivalent CaO+MgO par rapport au poids de ladite composition et avec au moins 12%, plus préférablement au moins 20%, de manière préférée au moins 30%, plus préférablement au moins 35% en poids d'un composé à base de fer exprimé en équivalent $Fe_2O_3$ par rapport au poids de ladite composition, ledit composé à base de fer présentant une distribution granulométrique très fine caractérisée par une taille médiane $d_{50}$ inférieure à 100$\mu$m, préférablement 50 $\mu$m ainsi qu'une taille $d_{90}$ inférieure à 200 $\mu$m, de préférence inférieure à 150 $\mu$m, préférablement inférieure à 130 $\mu$m, plus préférablement inférieure à 100 $\mu$m ; et

ii. un mélange dudit composé calco-magnésien vif avec ledit composé à base de fer pendant une période prédéterminée, suffisante pour obtenir un mélange pulvérulent sensiblement homogène dudit composé calco-magnésien vif et dudit composé à base de fer.

Plus particulièrement, dans le procédé selon la présente invention, bien qu'un liant ou lubrifiant puisse être ajouté directement au niveau de l'alimentation de la presse à rouleaux, ledit liant ou lubrifiant est ajouté au mélangeur, dans lequel ledit liant ou lubrifiant est inclus dans ledit mélange pulvérulent homogène.

Dans une autre forme de réalisation particulière du procédé selon la présente invention, ledit composé calco-magnésien contient au moins 10% en poids de chaux vive sous forme de particules broyées par rapport au poids de ladite composition.

Avantageusement, ledit composé calco-magnésien selon la présente invention contient au moins 40% en poids, de préférence au moins 50% poids, préférentiellement au moins 60 % en poids, particulièrement au moins 65% en poids, en particulier au moins 70% en poids, de préférence au moins 80% en poids, avantageusement au moins 90% en poids, voire même 100% en poids de chaux vive sous forme de particules broyées par rapport au poids de ladite composition.

On appelle chaux vive sous forme de particules broyées les fines de chaux provenant du broyage de la chaux vive et donc correspondant à une réduction dimensionnelle de la chaux en roche. Le broyage peut être indifféremment réalisé au départ du tout-venant sorti four et/ou sorti silo ou bien au départ du tout-venant sorti four et/ou sorti silo préalablement criblé. Le broyage peut être réalisé à l'aide de différents types de broyeurs (impact crusher, hammer crusher, double roll crusher, cone crusher,...), soit en circuit ouvert (pas de boucle de recirculation), soit en circuit fermé (boucle de recirculation).

La chaux vive sous forme de particules broyées (également appelées chaux de broyage) se distingue de la chaux de criblage. On appelle chaux de criblage les fines de chaux provenant du criblage de la chaux. On définit la granulométrie par la taille du crible. Par exemple, une chaux criblée à 3 mm conduit à l'obtention d'une chaux de criblage 0-3 mm. Ainsi le criblage sur le tout-venant sorti four conduit à une chaux de criblage « primaire ». Le criblage sur le tout-venant sorti silo de stockage conduit à une chaux de criblage « secondaire ».

Au sens de la présente invention, on entend par chaux vive sous forme de particules broyées, des fines de chaux contenant en général plus de très fines que les fines de chaux de criblage. Ainsi, si l'on considère par exemple des fines 0-3mm, les fines de chaux vive sous forme de particules broyées contiendront typiquement au moins 30% en poids, le plus souvent au moins 40% en poids, voir même au moins 50% en poids de très fines inférieures à 100 $\mu$m, alors que les fines de chaux de criblage contiendront souvent au plus 25% en poids, voir même au plus 15% en poids de très fines inférieures à 100 $\mu$m.

La composition chimique des fines de chaux de broyage est en générale plus homogène que celle des fines de chaux de criblage. Ainsi, si l'on considère par exemple une chaux en roche 10-50 mm cuite avec un combustible qui génère des cendres tel que le charbon (lignite, houille, anthracite...) ou encore le coke de pétrole, et que l'on caractérise les fines 0-3mm issues du broyage ou du criblage de cette chaux en roche, on constatera que la fraction 0-200 $\mu$m des fines 0-3 mm issues du broyage a une chimie similaire à celle de la fraction 200 $\mu$m-3 mm, alors que la fraction 0-200 $\mu$m des fines 0-3 mm issues du criblage contient plus d'impuretés que celle de la fraction 200 $\mu$m-3 mm.

Les fines de chaux de broyage sont en général plus réactives que les fines de chaux de criblage. Ainsi, pour la chaux vive à cuisson douce, si l'on mesure la réactivité à l'eau (norme EN459) des fines 0-3 mm, les fines de broyage présentent typiquement des valeurs de $t_{60}$ inférieures à 5 min là où les fines de criblage primaire présentent souvent des valeurs de $t_{60}$ supérieures à 5 min.

Il est en effet apparu de manière surprenante, sans qu'il soit actuellement possible d'en expliquer les raisons, que l'addition de chaux vive sous forme de particules broyées à une concentration d'au moins 10% en poids par rapport au poids des briquettes permettait d'obtenir une résistance mécanique à la chute fortement améliorée. Une teneur aussi restreinte que 10% en poids permet d'obtenir une amélioration significative de la résistance mécanique, bien que la teneur en particules broyées puisse aller jusqu'à 100% en poids.

Plus particulièrement, ladite chaux vive sous forme de particules broyées est une chaux vive à cuisson douce ou à cuisson moyenne, de préférence à cuisson douce, ladite chaux vive sous forme de particules broyées étant caractérisée par une valeur $t_{60}$ inférieure à 10 min, préférentiellement inférieure à 8 min, préférentiellement inférieure à 6 min, et encore préférentiellement inférieure à 4 min.

Dans une forme de réalisation préférentielle du procédé selon la présente invention, le procédé comprend en outre un prétraitement des briquettes sous atmosphère modifiée contenant au moins 2% en volume de $CO_2$ et au plus 30 % en volume de $CO_2$, de préférence au plus 25% en volume de $CO_2$, préférentiellement au plus 20% en volume de $CO_2$, plus préférentiellement au plus 15% en volume de $CO_2$, plus préférentiellement encore au plus 10% en volume de $CO_2$ par rapport à ladite atmosphère modifiée.

Il a en effet été constaté selon la présente invention qu'un prétraitement sous une telle atmosphère modifiée contenant de tels % en $CO_2$ par rapport à ladite atmosphère modifiée permet d'améliorer la résistance mécanique des briquettes.

D'autres formes de réalisation du procédé suivant l'invention sont indiquées dans les revendications annexées.

L'invention a aussi pour objet une composition sous forme de briquettes crues comprenant au moins un composé calco-magnésien vif et un composé à base de fer caractérisée en ce que la composition comprend au moins 40% en poids d'équivalent CaO+MgO par rapport au poids de ladite composition, ladite composition présentant un ratio molaire Ca/Mg supérieur ou égal à 1, de préférence supérieur ou égal à 2, plus préférentiellement supérieur ou égal à 3 et caractérisée en ce que ledit composé à base de fer est présent à une teneur d'au moins 12%, plus préférablement au moins 20%, de manière préférée au moins 30%, plus préférablement au moins 35% en poids d'équivalent $Fe_2O_3$ par rapport au poids de ladite composition, ledit composé à base de fer présentant une distribution granulométrique très fine caractérisée par une taille médiane d50 inférieure à 100 $\mu$m, préférablement inférieure à 50 $\mu$m ainsi qu'une taille d90 inférieure à 200 $\mu$m, de préférence inférieure à 150 $\mu$m, préférablement inférieure à 130 $\mu$m, plus préférablement inférieure à 100 $\mu$m, ladite composition présentant un indice de Shatter test inférieur ou égal à 20% pour des teneurs en oxyde de fer inférieures à 40%.

Cette résistance mécanique, évaluée par le Shattertest, pour des briquettes crues ayant des teneurs en composé à base de fer inférieures à 40% est particulièrement intéressante du fait que ces briquettes crues peuvent être par la suite traitées thermiquement, selon un mode de réalisation de l'invention, dans un four rotatif dans lequel ces briquettes sont donc soumises à des chutes à répétition.

Au sens de la présente invention, ledit composé calco-magnésien vif comprend un ou plusieurs composés calco-magnésien vif. Le composé calco-magnésien vif est choisi dans le groupe constitué de la chaux vive (calcique), de la chaux magnésienne, de la chaux dolomitique vive, de la dolomie calcinée et leurs mélanges, de préférence sous forme de particules, telles que des particules issues d'un criblage, d'un broyage, de poussières de filtres et leur mélange. Ledit composé calco-magnésien vif peut donc être considéré comme une composante calco-magnésienne de la composition sous forme de briquettes, laquelle peut contenir d'autres composés.

Suivant l'invention, ledit mélange pulvérulent comprend, au plus 88%, dans certaines forme de réalisation, au plus 60% en poids d'équivalent CaO+MgO par rapport au poids de ladite composition.

La présente invention se rapporte aussi à une composition sous forme de briquettes cuites, comprenant au moins un composé à base de fer, ladite composition comprenant au moins 40 % en poids d'équivalent CaO+MgO par rapport au poids de ladite composition et présentant un ratio molaire Ca/Mg supérieur ou égal à 1, de préférence supérieur ou égal à 2, plus préférentiellement supérieur ou égal à 3, caractérisé en ce que ledit composé à base de fer est présent à une teneur d'au moins 12%, plus préférablement au moins 20%, de manière préférée au moins 30%, plus préférablement au moins 35% en poids d'équivalent $Fe_2O_3$ par rapport au poids de ladite composition, ledit composé à base de fer comprenant au moins 40% préférablement au moins 60% de préférence au moins 80%, et de manière encore plus préférentielle au moins 90% de ferrite de calcium, exprimé en poids d'équivalent $Fe_2O_3$, par rapport au poids total dudit composé à base de fer exprimé en poids d'équivalent $Fe_2O_3$.

Le ferrite de calcium est représenté par les formules suivantes : $CaFe_2O_4$ et/ou $Ca_2Fe_2O_5$.

Suivant l'invention, ledit mélange pulvérulent comprend au plus 88%, dans certaines forme de réalisation, au plus 60% en poids d'équivalent CaO+MgO par rapport au poids de ladite composition.

Dans un mode de réalisation particulier de la présente invention, lorsque la composition est sous forme de briquettes cuites, ledit composé calco-magnésien vif comprend au moins 10%, préférablement 20%, plus préférablement 30%, de manière plus préférentielle 40% en poids d'équivalent CaO+MgO, par rapport au poids total de ladite composition.

De manière préférentielle, que la composition soit sous forme de briquettes crues ou cuites, ledit composé calco-magnésien vif comprend des particules fines de composé calco-magnésien choisies parmi des particules fines rejetées au criblage de la production de galets dudit composé calco-magnésien vif, des poussières calco-magnésiennes de filtre à une concentration de 0% en poids à 90 % en poids par rapport au poids total dudit composé calco-magnésien vif et de 10 et 100% en poids de chaux vive sous forme de particules broyées, par rapport au poids total dudit composé calco-magnésien vif.

De manière préférentielle, que la composition soit sous forme de briquettes crues ou cuites, ledit composé calco-magnésien vif contient de 0 à 100% en poids de chaux vive sous forme de particules broyées au départ des galets dudit composé calco-magnésien.

Dans une variante préférentielle de la présente invention, que la composition soit sous forme de briquettes crues ou cuites, ledit composé calco-magnésien vif contient de 0 à 90% en poids de particules fines rejetées au criblage de production de galets dudit composé calco-magnésien et de 10 et 100% en poids de chaux vive sous forme de particules broyées, par rapport au poids total dudit composé calco-magnésien.

Avantageusement, dans les briquettes crues ou cuites, ladite chaux vive sous forme de particules broyées est présente à une concentration d'au moins 15 % en poids, en particulier d'au moins 20% en poids, de manière plus préférentielle d'au moins 30% en poids, de manière particulièrement préférentielle d'au moins 40% en poids par rapport au poids de la composition.

Plus particulièrement, que la composition soit sous forme de briquettes crues ou cuites, ledit composé calco-magnésien vif est un composé calco-magnésien à cuisson douce ou moyenne, de préférence à cuisson douce.

Lorsque de la chaux vive sous forme de particules broyées est présente, ladite chaux vive sous forme de particules broyées est une chaux vive à cuisson douce ou à cuisson moyenne, de préférence à cuisson douce.

Plus particulièrement, selon la présente invention, lorsque la composition est sous forme de briquettes crues, ladite composition présente une surface spécifique BET supérieure ou égale à 1 $m^2/g$, de préférence supérieure ou égale à 1,2 $m^2/g$, de manière plus préférentielle supérieure ou égale à 1,4 $m^2/g$.

Avantageusement, selon la présente invention, lorsque la composition est sous forme de briquettes crues, ladite composition présente une porosité supérieure ou égale à 20%, de préférence supérieure ou égale à 22 %, de manière plus préférentielle supérieure ou égale à 24%.

Par les termes « porosité de la composition sous forme de briquettes », on entend au sens de la présente invention, le volume poreux total de mercure déterminé par porosimétrie par intrusion de mercure suivant la partie 1 de la norme ISO 15901-1 :2005E qui consiste à diviser la différence entre la densité squelettique, mesurée à 30000 psia, et la densité apparente, mesurée à 0.51 psia, par la densité squelettique.

Alternativement, la mesure de la porosité peut également être mesurée par porosimétrie par intrusion de pétrole. La densité et la porosité des briquettes sont déterminées par intrusion de pétrole lampant, selon un protocole de mesure issu de la norme EN ISO 5017. Les mesures sont réalisées sur 5 briquettes.

La densité des briquettes est calculée selon la formule m1 / (m3 - m2) x Dp et la porosité en pourcent selon la formule (m3 - m1) / (m3 - m2) x 100.

m1 est la masse de ces 5 briquettes, m2 est la masse de ces 5 briquettes immergées dans le pétrole et m3 est la masse de ces 5 briquettes « humides », c'est-à-dire imprégnées par le pétrole. Dp est la densité du pétrole.

Plus particulièrement, selon la présente invention, lorsque la composition est sous forme de briquettes crues et que le composé calco-magnésien est principalement de la chaux vive, ladite composition présente une valeur de réactivité $t_{60}$ inférieure à 10 min, de préférence inférieure à 8 min, de préférence inférieure à 6 min et de manière encore plus préférentielle inférieure à 4 min. Pour tenir compte de la teneur en composé à base de fer dans la composition, on ajoute un peu plus de 150g de ladite composition dans le test de réactivité pour avoir l'équivalent de 150g de chaux vive ajoutée.

Avantageusement, selon la présente invention, lorsque la composition est sous forme de briquettes crues et que le composé calco-magnésien est principalement de la dolomie cuite, ladite composition présente une valeur de réactivité $t_{70}$ inférieure à 10 min, de préférence inférieure à 8 min, de préférence inférieure à 6 min et de manière encore plus préférentielle inférieure à 4 min. Pour tenir compte de la teneur en composé à base de fer dans la composition, on ajoute un peu plus de 120g de ladite composition dans le test de réactivité pour avoir l'équivalent de 120g de dolomie cuite ajoutée.

Plus particulièrement, selon la présente invention, lorsque la composition est sous forme de briquettes cuites, ladite composition présente une surface spécifique BET supérieure ou égale à 0,4 $m^2/g$, de préférence supérieure ou égale à 0,6 $m^2/g$, de manière plus préférentielle supérieure ou égale à 0,8 $m^2/g$.

Avantageusement, selon la présente invention, lorsque la composition est sous forme de briquettes cuites, ladite composition présente une porosité supérieure ou égale à 20%, de préférence supérieure ou égale à 22 %, de manière plus préférentielle supérieure ou égale à 24%.

Plus particulièrement, selon la présente invention, lorsque la composition est sous forme de briquettes cuites et que le composé calco-magnésien est principalement de la chaux vive, ladite composition présente une valeur $t_{60}$ inférieure à 10 min, de préférence inférieure à 8 min, de préférence inférieure à 6 min et de manière encore plus préférentielle inférieure à 4 min. Pour tenir compte de la teneur en composé à base de fer dans la composition, on ajoute un peu plus de 150g de ladite composition dans le test de réactivité pour avoir l'équivalent de 150g de chaux vive « libre » ajoutée. Par chaux vive « libre », on entend la chaux vive qui n'a pas réagi avec l'oxyde de fer pour conduire aux ferrites de calcium $CaFe_2O_4$ et/ou $Ca_2Fe_2O_5$.

Dans une forme préférée de la présente invention, que la composition soit sous forme de briquettes crues ou cuites, ledit au moins un composé calco-magnésien est formé de particules inférieures à 7 mm. Alternativement, ledit au moins un composé calco-magnésien est formé de particules inférieures à 5 mm. Dans une autre variante selon la présente invention, ledit au moins un composé calco-magnésien est formé de particules inférieures à 3 mm.

Dans encore une autre variante de la présente invention, que la composition soit sous forme de briquettes crues ou cuites, ledit au moins un composé calco-magnésien est un mélange de particules inférieures à 7 mm et/ou de particules inférieures à 5 mm et/ou de particules inférieures à 3 mm.

Dans un mode de réalisation de l'invention, la composition sous forme de briquettes crues ou cuites comprend en outre un liant ou un lubrifiant, plus particulièrement choisi dans le groupe constitué des liants d'origine minérale tels que les ciments, les argiles, les silicates, des liants d'origine végétale ou animale, tels que les celluloses, les amidons, les gommes, les alginates, la pectine, les colles, des liants d'origine synthétique, tels que les polymères, les cires, des lubrifiants liquides tels que des huiles minérales ou des silicones, des lubrifiants solides tels que le talc, le graphite, les paraffines, les stéarates, en particulier le stéarate de calcium, le stéarate de magnésium et de leurs mélanges, de préférence du stéarate de calcium et/ou du stéarate de magnésium, à une teneur comprise entre 0,1 et 1 % en poids, de préférence entre 0,15 et 0,6 % en poids, de manière plus préférentielle entre 0,2 et 0,5 % en poids par rapport au poids total de la composition.

La composition selon la présente invention est une composition de briquettes crues ou cuites produites en volumes industriels et conditionnée dans des types de récipients ayant un volume de contenu supérieur à 1 m$^3$ tels que gros sacs, conteneurs, silos et analogues, de préférence scellés.

Avantageusement, les briquettes de la composition sous forme de briquettes crues présentent un indice de Shatter test inférieur à 10 %, pour des teneurs en oxyde de fer inférieures à 20% en poids de la composition.

Avantageusement, les briquettes de la composition sous forme de briquettes cuites présentent un indice de Shatter test inférieur à 8%, plus particulièrement inférieur à 6 %, quelle que soit la teneur en composé à base de fer.

Avantageusement, que la composition soit sous forme de briquettes crues ou cuites, lesdites briquettes présentent une dimension la plus élevée, d'au plus 50 mm, de préférence d'au plus 40 mm, de manière plus préférentielle d'au plus 30 mm. Ceci signifie que les briquettes de la composition sous forme de briquettes, passent au travers d'un crible à mailles carrées de côté respectivement de 50 mm, de préférence de 40 mm, et en particulier de 30 mm.

De préférence, lesdites briquettes crues ou cuites présentent une dimension la plus élevée d'au moins 10 mm, de préférence d'au moins 15 mm, de manière plus préférentielle d'au moins 20 mm.

Par les termes une dimension la plus élevée, on entend une dimension caractéristique de la briquette crue ou cuite qui est la plus grande, soit le diamètre, la longueur, la largeur, l'épaisseur, de préférence, dans la direction longitudinale de la briquette de forme oblongue.

De préférence, que la composition soit sous forme de briquettes crues ou cuites, ledit au moins un composé calco-magnésien est de la dolomie vive.

Alternativement, que la composition soit sous forme de briquettes crues ou cuites, ledit au moins un composé calco-magnésien est de la chaux vive.

Avantageusement, lesdites briquettes crues ou cuites ont un poids moyen par briquette d'au moins 5 g, de préférence d'au moins 10 g, de préférence encore d'au moins 12 g, et en particulier d'au moins 15 g.

Selon la présente invention, lesdites briquettes crues ou cuites ont un poids moyen par briquette inférieur ou égal à 100 g, de préférence inférieur ou égal à 60 g, de préférence encore inférieur ou égal à 40 g et en particulier inférieur ou égal à 30 g.

De manière avantageuse, lesdites briquettes crues ou cuites ont une densité apparente comprise entre 2 g/cm$^3$ et 3,0 g/cm$^3$, avantageusement entre 2,2 g/cm$^3$ et 2,8 g/cm$^3$.

D'autres formes de réalisation de la composition sous forme de briquettes crues ou cuites suivant l'invention sont indiquées dans les revendications annexées.

L'invention a aussi pour objet une utilisation d'une composition sous forme de briquettes crues ou sous forme de briquettes cuites selon la présente invention dans la sidérurgie, en particulier dans les convertisseurs à oxygène ou bien dans les fours à arcs électriques.

Plus particulièrement, les briquettes crues ou cuites selon la présente invention sont utilisées dans des convertisseurs à oxygène ou dans des fours à arcs électriques, en mélange avec des briquettes de composés calco-magnésiens vifs ou avec des galets de composés calco-magnésiens vifs.

En effet, durant les premières minutes du procédé de raffinage, il n'y a pas suffisamment de laitier disponible dans la cuve réactionnelle pour que commence efficacement la réaction de déphosphoration dans les procédés de l'état de la technique. L'utilisation de la composition selon la présente invention, donc dopée avec des fondants, s'avère fondre plus rapidement que la chaux en roches, et aide à former un laitier liquide plus tôt au début du procédé, en comparaison avec les procédés conventionnels, du fait d'un mélange homogène et du façonnage de ce mélange homogénéisé qui permet d'accélérer encore le procédé de formation de laitier et de minimiser la formation de composants de laitier à point de fusion élevé tels que les silicates de calcium qui se forment habituellement durant le procédé susmentionné de l'état de la technique.

L'invention a également pour objet l'utilisation d'une composition sous forme de briquettes crues ou sous forme de briquettes cuites dans un procédé de raffinage de métal fondu, en particulier de déphosphoration de métal fondu et/ou de désulfurisation de métal fondu et/ou de réduction de perte en métal raffiné dans le laitier.

L'utilisation d'une composition sous forme de briquettes crues ou sous forme de briquettes cuites selon la présente invention dans un procédé de raffinage de métal fondu comprend

- au moins une étape d'introduction de métal chaud et éventuellement de déchets à base de fer dans une cuve,
- au moins une étape d'introduction d'une composition sous forme de briquettes crues ou sous forme de briquettes cuites selon la présente invention, de préférence sous forme de briquettes cuites selon la présente invention,
- au moins une étape de soufflage d'oxygène dans ladite cuve,
- au moins une étape de formation d'un laitier avec ladite composition de briquettes dans ladite cuve,
- au moins une étape d'obtention de métal raffiné ayant une teneur réduite en composés phosphorés et/ou soufrés et/ou une teneur augmentée en métal raffiné à partir du métal chaud par déphosphoration et/ou désulfuration, et

- au moins une étape de déchargement dudit métal raffiné ayant une teneur réduite en composants phosphorés et/ou soufrés et/ou augmentée en métal raffiné.

L'utilisation suivant la présente invention comprend en outre une étape d'ajout de chaux vive, de préférence de la chaux vive en roche ou des compacts de chaux vive, en particulier de tablettes ou de briquettes de chaux vive.

D'autres formes d'utilisation suivant l'invention sont indiquées dans les revendications annexées.

D'autres caractéristiques, détails et avantages de l'invention ressortiront de la description donnée ci-après, à titre non limitatif et en faisant référence aux exemples et aux figures.

La figure 1 représente la corrélation entre l'indice de Shatter test et la force de compression sur différents échantillons de briquettes de composé calco-magnésien et éventuellement de composé à base de fer.

La figure 2 est un graphique de la surface spécifique BET et de la porosité par intrusion de petrole en fonction de la teneur en équivalent $Fe_2O_3$ dans les briquettes selon la présente invention.

La figure 3 est un graphique de l'indice de shatter test (STI) en fonction de la teneur en équivalent $Fe_2O_3$ dans les briquettes cuites et crues selon la présente invention.

La figure 4 est un graphique du % en $Fe_2O_3$ converti en ferrites de calcium en fonction de la teneur en équivalent $Fe_2O_3$ dans les briquettes cuites selon la présente invention

La figure 5 est un graphique de l'évolution de la teneur de ferrites de calcium exprimée en équivalent $Fe_2O_3$ dans les briquettes cuites en fonction de la teneur en oxyde de fer exprimée en équivalent $Fe_2O_3$ dans les briquettes crues avant traitement thermique.

La présente invention concerne un procédé de briquetage de particules fines de composés calco-magnésiens et de composé à base de fer, ledit composé à base de fer présentant une distribution granulométrique très fine caractérisée par taille médiane $d_{50}$ inférieure à 100 $\mu$m, préférablement inférieure à 50 $\mu$m ainsi qu'une taille d90 inférieure à 200 $\mu$m, de préférence inférieure à 150 $\mu$m, préférablement inférieure à 130 $\mu$m, plus préférablement inférieure à 100 $\mu$m100 $\mu$m.

Le procédé de briquetage selon l'invention comprend une amenée d'un mélange pulvérulent sensiblement homogène comprenant au moins 40% en poids d'équivalent CaO+MgO d'un composé calco-magnésien vif et d'au moins 12%, plus préférablement au moins 20%, de manière préférée au moins 30%, plus préférablement au moins 35% en poids d'un composé à base de fer exprimé en d'équivalent $Fe_2O_3$ par rapport au poids de ladite composition.

Suivant l'invention, ledit mélange pulvérulent comprend au plus 88%, dans certaines forme de réalisation, au plus 60% en poids d'équivalent CaO+MgO par rapport au poids de ladite composition

Le mélange homogène dans lequel le composé à base de fer est réparti de manière homogène est alimenté à une presse à rouleaux, aussi appelée parfois presse tangentielle, par exemple une presse Komarek, Sahut Konreur, Hosokawa Bepex, Köppern. Dans la presse à rouleaux, le mélange pulvérulent sensiblement homogène est comprimé, éventuellement en présence d'un liant ou d'un lubrifiant, plus particulièrement choisi dans le groupe constitué des liants d'origine minérale tels que les ciments, les argiles, les silicates, des liants d'origine végétale ou animale, tels que les celluloses, les amidons, les gommes, les alginates, la pectine, les colles, des liants d'origine synthétique, tels que les polymères, les cires, des lubrifiants liquides tels que des huiles minérales ou des silicones, des lubrifiants solides tels que le talc, le graphite, les paraffines, les stéarates, en particulier le stéarate de calcium, le stéarate de magnésium, et de leurs mélanges, de préférence du stéarate de calcium et/ou du stéarate de magnésium, à une teneur comprise entre 0,1 et 1 % en poids, de préférence entre 0,15 et 0,6 % en poids, de manière plus préférentielle entre 0,2 et 0,5 % en poids par rapport au poids total desdites briquettes.

En utilisation, les rouleaux de la presse à rouleaux développent des vitesses linéaires en périphérie des rouleaux comprises entre 10 et 100 cm/s, préférentiellement comprises entre 20 et 80 cm/s, et des pressions linéaires comprises entre 60 et 160 kN/cm, préférentiellement comprises entre 80 et 140 kN/cm, et de manière encore plus préférentielle comprises entre 80 et 120 kN/cm .

En considérant un angle de ½ dégré sur laquelle la pression linéaire s'applique en surface des frettes, on peut calculer une pression surfacique qui est égale à la pression linéaire divisée par (½.π.D)/360 où D est le diamètre des frettes exprimé en cm. La pression surfacique est comprise entre 300 et 500 MPa, préférentiellement entre 300 et 450 MPa, et encore préférentiellement entre 350 et 450 MPa.

A l'issue de la compression, la composition calco-magnésienne sous forme de briquettes crues est obtenue et ces dernières sont collectées.

Dans une forme de réalisation préférée du procédé selon la présente invention, les briquettes crues collectées sont traitées thermiquement à une température comprise entre 900°C et 1200°C, de préférence entre 1050°C et 1200°C, plus préférablement entre 1100°C et 1200°C inclus. Le temps de traitement thermique est réalisé de préférence pendant une durée prédéterminée comprise entre 3 et 20 minutes, avec obtention de briquettes cuites dans lesquelles ledit oxyde de fer est converti en ferrite de calcium, c'est-à-dire de briquettes cuites comprenant un composé calco-magnésien vif et un composé de ferrite de calcium présent à une teneur d'au moins 12%, plus préférablement d'au moins 20%, de manière préférée d'au moins 30%, plus préférablement d'au moins 35% en équivalent $Fe_2O_3$.

Dans un mode de réalisation de l'invention, ledit traitement thermique des briquettes crues est réalisé dans un four rotatif à haute température. Préférablement, le four rotatif est utilisé pour le traitement thermique de briquettes dont la teneur en oxyde de fer est inférieure à 40%.

Alternativement, le traitement thermique est effectué dans un four horizontal comme par exemple un four tunnel, un four à passage, un four à charriots, un four à rouleaux ou encore un four à bande en maille. En variante, tout autre type de four conventionnel, mais ne conduisant pas à l'altération de l'intégrité des compacts, par exemple en raison d'une attrition trop importante, peut être utilisé.

Le refroidissement peut soit être effectué de manière conventionnel dans la partie aval du four, soit à l'extérieur du four, comme par exemple dans un refroidisseur vertical à contre-courant pour l'air de refroidissement ou encore dans un refroidisseur en lit fluidifié par l'air de refroidissement en cas de trempe.

Dans un mode particulier, le refroidissement à l'issue du traitement thermique est effectué de manière rapide en moins de 15 min, préférentiellement en moins de 10 min, en lit fluidifié par l'air de refroidissement.

Dans une forme préférée selon la présente invention, le procédé comprend, avant ladite amenée d'un mélange pulvérulent homogène,

i. une alimentation d'un mélangeur à poudres avec au moins 40 % en poids d'équivalent CaO+MgO d'un composé calco-magnésien vif et avec au moins 12%, plus préférablement au moins 20%, de manière préférée au moins 30%, plus préférablement au moins 35% d'un composé à base de fer exprimé en équivalent $Fe_2O_3$ présentant une distribution granulométrique très fine caractérisée par une taille médiane dso inférieure à 100$\mu$m, préférablement inférieure à 50 $\mu$m ainsi qu'une taille $d_{90}$ inférieure à 200 $\mu$m, de préférence inférieure à 150 $\mu$m, préférablement inférieure à 130 $\mu$m, plus préférablement inférieure à 100 $\mu$m ; et

ii. un mélange dudit composé calco-magnésien vif avec ledit composé à base de fer pendant une période prédéterminée, suffisante pour obtenir un mélange pulvérulent sensiblement homogène dudit composé calco-magnésien vif et dudit composé à base de fer.

Dans une variante de l'invention, le composé calco-magnésien comprend au moins 10% en poids de particules de chaux vive broyées, de préférence au moins 20% en poids, plus particulièrement au moins 30% en poids et au plus 100% en poids par rapport au poids total dudit composé calco-magnésien.

Les briquettes « crues » sont à base de chaux vives (éventuellement dolomitiques) et de particules ultrafines d'oxyde de fer. Elles sont caractérisées par une teneur massique en fer d'au moins 12%, plus préférablement d'au moins 20%, de manière préférée d'au moins 30%, plus préférablement d'au moins 35% en poids exprimée en équivalent $Fe_2O_3$. Les briquettes crues sont également caractérisées par une teneur massique en calcium et magnésium d'au moins de 40% en poids, exprimée en équivalent CaO et MgO. L'analyse chimique est réalisée par spectrométrie par fluorescence X (XRF) selon la norme EN 15309.

L'analyse chimique, semi-quantitative, par XRF pour déterminer la concentration massique relative des éléments dont la masse atomique est comprise entre 16 (oxygène) et 228 (uranium) est réalisée au départ des échantillons broyés à 80$\mu$m et mis en forme sous forme de pastille. L'échantillon est excité par une source à haute énergie (Rayon X primaire) et en récupérant son état d'excitation original, l'échantillon émet des rayons X secondaires, caractéristiques des éléments chimiques composant l'échantillon.

Les échantillons sont introduits dans un appareillage PANalytical/MagiX PRO PW2540, fonctionnant en dispersion de longueur d'ondes. La mesure est réalisée avec une puissance de 50kV et 80 mA, avec un détecteur Duplex.

Les résultats de l'analyse donnent la teneur en Calcium, en Magnésium et en Fer et ces mesures sont rapportées en poids d'équivalent CaO et MgO, en poids d'équivalent $Fe_2O_3$.

L'analyse semi-quantitative des composés à base de fer (oxydes de fer $Fe_2O_3$, $Fe_3O_4$, ferrites de calcium $CaFe_2O_4$, $Ca_2Fe_2O_5$) est effectuée au départ d'un diffractogramme de rayons X par la méthode Rietveld.

Cette méthode consiste à simuler un diffractogramme à partir d'un modèle cristallographique de l'échantillon, puis d'ajuster les paramètres de ce modèle afin que le diffractogramme simulé soit le plus proche possible du diffractogramme expérimental. A l'issu de l'analyse semi-quantitative, on vérifie que la quantité total de fer exprimé en équivalent $Fe_2O_3$ ne diffère pas de plus de 10% par rapport aux valeurs obtenues par XRF. Le pourcentage du fer total sous forme de ferrites de calcium est obtenu par une simple division (Fe dans les ferrites divisé par Fe dans l'ensemble des composés à base de fer).

Les briquettes crues se caractérisent également par une surface spécifique BET supérieure ou égale à 1 m$^2$/g, préférentiellement 1,2 m$^2$/g, préférentiellement 1,4 m$^2$/g.

La porosité des briquettes crues est supérieure ou égale à 20% préférentiellement 22%, préférentiellement 24%.

Les briquettes crues présentent une densité apparente comprise entre 2,0 et 3,0 et de préférence entre 2,2 et 2,8.

Les briquettes présentent une bonne résistance au vieillissement. Ainsi, lorsqu'elles sont exposées à une atmosphère humide contenant par exemple 5 à 15 $g/m^3$ d'humidité absolue, la dégradation de leurs propriétés mécaniques (STI) n'intervient qu'au-delà de 1,5 % de prise de masse, préférentiellement 2 % de prise de masse, et encore préférentiellement 2,5 % de prise de masse, consécutivement à la réaction d'hydratation de la chaux vive CaO en chaux éteinte $Ca(OH)_2$.

Les briquettes cuites comprennent un composé calco-magnésien, par exemple de chaux vives (dolomitiques) et un composé à base de fer, contenant des particules ultrafines d'oxyde de fer et des ferrites de calcium $CaFe_2O_4$ et/ou $Ca_2Fe_2O_5$.

Les briquettes cuites sont caractérisées par une teneur massique en fer d'au moins 12%, plus préférablement d'au moins 20%, de manière préférée d'au moins 30%, plus préférablement d'au moins 35% en poids exprimée en équivalent $Fe_2O_3$. Elles sont également caractérisées par une teneur massique en calcium et magnésium d'au moins 40% en poids exprimée en équivalent CaO et MgO. L'analyse chimique est réalisée comme mentionné précédemment par XRF.

Au moins 40%, préférentiellement au moins 50%, préférentiellement au moins 60% et encore préférentiellement au moins 70% du fer total est sous la forme de ferrites de calcium.

La quantification des ferrites de calcium est réalisée par analyse DRX/Rietveld après broyage des briquettes, comme pour les briquettes crues.

Les briquettes cuites de la présente invention présentent un Indice de ShatterTest (« STI », i.e. pourcentage massiques de fines inférieures à 10mm après 4 chutes de 2m) inférieur à 6%, quelle que soit la teneur en composés à base de fer.

Elles se caractérisent également par une surface spécifique supérieure ou égale à 0,4 $m^2/g$, préférentiellement 0,5 $m^2/g$, préférentiellement 0,6 $m^2/g$.

La porosité est supérieure ou égale à 20% préférentiellement 22%, préférentiellement 24%.

Les briquettes cuites présentent une densité apparente comprise entre 2,0 et 3,0 et de préférence entre 2,2 et 2,8.

Les briquettes cuites présentent une bonne résistance au vieillissement. Ainsi, lorsqu'elles sont exposées à une atmosphère humide contenant par exemple 5 à 15 $g/m^3$ d'humidité absolue, la dégradation de leurs propriétés mécaniques (STI) n'intervient qu'au-delà de 4 % de prise de masse, préférentiellement 4,5 % de prise de masse, et encore préférentiellement 5 % de prise de masse, consécutivement à la réaction d'hydratation de la chaux vive CaO en chaux éteinte $Ca(OH)_2$.

### Exemples.-

### Exemple comparatif 1.- Briquettes de chaux vive et d'oxyde de fer peu actif

Les fines de chaux vive de broyage ont été préparées au départ d'une chaux en roche à cuisson douce produite dans un four régénératif à flux parallèle. Le broyage est réalisé dans un broyeur à marteaux équipé d'un crible à 2 mm et d'une boucle de recirculation pour les tailles supérieures à 2 mm. Ces fines de chaux vive de broyage contiennent 71% de particules supérieures à 90 $\mu$m, 37% de particules supérieures à 500 $\mu$m, 21% de particules supérieures à 1 mm et 1% de particules comprises entre 2 et 3 mm. La valeur $t_{60}$ du test de réactivité à l'eau est de 0,9 min. La surface spécifique BET (mesurée par manométrie d'adsorption d'azote après dégazage sous vide à 190°C pendant au moins deux heures et calculée selon la méthode BET multipoints telle que décrite dans la norme ISO 9277:2010E) est de 1,7 m2/g. Ces fines de chaux vive de broyage contiennent 95,7% de CaO et 0,8% de MgO en poids.

Les fines d'oxyde de fer proviennent du broyage d'un minerai de fer de type magnétite $Fe_3O_4$ passant au travers un tamis à 250 $\mu$m mais ne passant pas au travers un tamis à 125 $\mu$m, caractérisées en granulométrie laser Coulter par un $d_{10}$ de 140 $\mu$m, un $d_{50}$ de 227 $\mu$m et un $d_{90}$ de 318 $\mu$m. Ces fines d'oxyde de fer contiennent environ 67% de Fe.

Le mélange, réalisé est constitué de :

- 89,75% en poids de ces fines de chaux vive de broyage,
- 10% en poids de ces fines d'oxyde de fer,
- 0,25% en poids de poudre de stéarate de calcium.

Les briquettes sont produites au départ de ce mélange. On obtient 8,2 tonnes de briquettes présentant un volume moyen de 8,5 cm3, un poids moyen de 20,5 g et une densité moyenne de 2,4. Ces briquettes ont une longueur d'environ 36 mm, une largeur d'environ 26 mm et une épaisseur d'environ 15,8 mm. Ces briquettes développent une surface spécifique BET de 1,6 $m^2/g$ et ont un volume poreux total de mercure de 26%.

La réactivité à l'eau des briquettes est déterminée en ajoutant 166,7 g de ces briquettes, préalablement broyées sous la forme de fines de taille comprise entre 0 et 1 mm, à 600 mL d'eau à 20°C. Les 166,7 g de briquettes correspondent à 150 g de chaux vive. La valeur t60 est de 1,0 min.

On fait un Shatter Test au départ de 10 kg de ces briquettes en réalisant successivement 4 chutes de 2 m. On pèse la quantité des fines inférieures à 10 mm générée à l'issue de ces 4 chutes. On obtient un Indice de Shatter Test de 4,9%.

La distribution granulométrique des particules à base de fer dans la composition sous forme de briquette est déterminée par microscopie électronique à balayage et cartographie X, couplée à de l'analyse d'image. Les résultats sont rassemblés dans le tableau 1. La fraction volumique de l'oxyde de fer en surface des particules d'oxyde de fer dans la composition sous forme de briquette est de 24 %.

Les briquettes sont caractérisées également en réalisant un traitement thermique de 10 min à 1100°C (enfournement / défournement à chaud) sur 3 de ces briquettes à l'issue duquel une poudre de granulométrie inférieure à 80 $\mu$m est préparée. Celle-ci est caractérisée en diffraction des rayons X et une quantification des phases est réalisée par analyse Rietveld. 16% du fer total est sous la forme de ferrites de calcium $CaFe_2O_4$ ou $Ca_2Fe_2O_5$, et 84% est toujours sous la forme $Fe_2O_3$ ou $Fe_3O_4$.

## Exemple Comparatif 2.- Briquettes de chaux vive et d'oxyde de fer peu actif

Les fines de chaux vive de broyage sont celles de l'exemple comparatif 1. Les fines d'oxyde de fer proviennent du broyage d'un minerai de fer de type magnétite $Fe_3O_4$ passant au travers un tamis à 500 $\mu$m mais ne passant pas au travers un tamis à 250 $\mu$m, caractérisées en granulométrie laser Coulter par un $d_{10}$ de 282 $\mu$m, un $d_{50}$ de 417 $\mu$m et un $d_{90}$ de 663 $\mu$m. Ces fines d'oxyde de fer contiennent environ 67% de Fe.

Le mélange est constitué de :

- 89,75% en poids de ces fines de chaux vive de broyage,
- 10% en poids de ces fines d'oxyde de fer,
- 0,25% en poids de poudre de stéarate de calcium.

Les briquettes sont produites au départ de ce mélange. On obtient 8,5 tonnes de briquettes présentant un volume moyen de 8,4 cm3, un poids moyen de 20,3 g et une densité moyenne de 2,4. Ces briquettes ont une longueur d'environ 36 mm, une largeur d'environ 26 mm et une épaisseur d'environ 15,7 mm. Ces briquettes développent une surface spécifique BET de 1,6 m$^2$/g et ont un volume poreux total de mercure de 26%.

La réactivité à l'eau des briquettes est déterminée en ajoutant 166,7 g de ces briquettes, préalablement broyées sous la forme de fines de taille comprise entre 0 et 1 mm, à 600 mL d'eau à 20°C. Les 166,7 g de briquettes correspondent à 150 g de chaux vive. La valeur t60 est de 0,9 min.

On fait un Shatter Test au départ de 10 kg de ces briquettes en réalisant successivement 4 chutes de 2 m. On pèse la quantité des fines inférieures à 10 mm générée à l'issue de ces 4 chutes. On obtient un Indice de Shatter Test de 4,8%.

La distribution granulométrique des particules à base de fer dans la composition sous forme de briquette est déterminée par microscopie électronique à balayage et cartographie X, couplée à de l'analyse d'image. Les résultats sont rassemblés dans le tableau 1. La fraction volumique de l'oxyde de fer en surface des particules d'oxyde de fer dans la composition sous forme de briquette est de 10 %.

Les briquettes sont caractérisées également en réalisant un traitement thermique de 10 min à 1100°C (enfournement / défournement à chaud) sur 3 de ces briquettes à l'issue duquel une poudre de granulométrie inférieure à 80 $\mu$m est préparée. Celle-ci est caractérisée en diffraction des rayons X et une quantification des phases est réalisée par analyse Rietveld. 11% du fer total est sous la forme de ferrites de calcium $CaFe_2O_4$ ou $Ca_2Fe_2O_5$, et 89% est toujours sous la forme $Fe_2O_3$ ou $Fe_3O_4$.

## Exemple Comparatif 3.- Briquettes de chaux vive et d'oxyde de fer peu actif, traitées thermiquement

Au départ de 1 tonne de briquettes de l'exemple comparatif 2, disposées dans des boites de telle sorte que l'épaisseur de lit de briquettes soit de 100 mm, on réalise un traitement thermique de 2 heures à 1200°C, avec des rampes de montée et de descente en température de 50 degrés C par minute.

On obtient des briquettes présentant un volume moyen de 7,2 cm3, un poids moyen de 20,1 g et une densité moyenne de 2,4. Ces briquettes ont une épaisseur d'environ 15,4 mm. Ces briquettes développent une surface spécifique BET de 0,4 m$^2$/g et ont un volume poreux total de mercure de 23%.

On fait un Shatter Test au départ de 10 kg de ces briquettes en réalisant successivement 4 chutes de 2 m. On pèse la quantité des fines inférieures à 10 mm générée à l'issue de ces 4 chutes. On obtient un Indice de Shatter Test de 1,5%.

La fraction volumique de l'oxyde de fer en surface des particules d'oxyde de fer est de 9 %. La poudre d'oxyde de fer contient donc 9 % d'oxyde de fer actif.

Au départ de 30 de ces briquettes traitées thermiquement, on prépare une poudre de granulométrie inférieure à 80 $\mu$m. Celle-ci est caractérisée en diffraction des rayons X et une quantification des phases est réalisée par analyse Rietveld. 16% du fer total est sous la forme de ferrites de calcium $CaFe_2O_4$ ou $Ca_2Fe_2O_5$, et 84% est toujours sous la forme $Fe_2O_3$ ou $Fe_3O_4$.

La réactivité à l'eau des briquettes est déterminée en ajoutant 169,0 g de ces briquettes, préalablement broyées sous la forme de fines de taille comprise entre 0 et 1 mm, à 600 mL d'eau à 20°C. Les 169,0 g de briquettes correspondent à 150 g de chaux vive libre (c'est-à-dire n'étant pas sous la forme de ferrites de calcium). La valeur $t_{60}$ est de 13 min.

**Tableau n°1.-** distribution granulométrique (exprimée en pourcentage surfacique d'une coupe des briquettes) déterminée par microscopie électronique à balayage et cartographie X, couplée à l'analyse d'image, des particules à base de fer dans les briquettes

| | | | EC 1 | EC 2 |
|---|---|---|---|---|
| >2mm | | | 0,0 | 0,0 |
| < 1-2 mm > | | | 0,0 | 0,0 |
| < 0,5-1 mm> | | | 0,0 | 0,0 |
| < 315-500 $\mu$m > | | | 0,0 | 0,0 |
| < 250-315 $\mu$m > | | | 0,0 | 15,6 |
| < 200-250 $\mu$m > | | | 0,0 | 7,9 |
| < 160-200 $\mu$m > | | | 0,0 | 48,4 |
| < 125-160 $\mu$m > | | | 0,0 | 20,0 |
| < 90-125 $\mu$m > | | | 0,0 | 7,7 |
| < 80-90 $\mu$m > | | | 40,4 | 0,0 |
| < 63-80 $\mu$m > | | | 36,0 | 0,0 |
| < 50-63 $\mu$m > | | | 11,9 | 0,2 |
| < 45-50 $\mu$m > | | | 0,0 | 0,0 |
| < 40-45 $\mu$m > | | | 10,1 | 0,1 |
| < 32-40 $\mu$m > | | | 0,0 | 0,0 |
| < 20-32 $\mu$m > | | | 1,2 | 0,0 |
| < 10-20 $\mu$m > | | | 0,4 | 0,0 |
| < 5-10 $\mu$m > | | | 0,0 | 0,0 |
| < 2-5 $\mu$m > | | | 0,0 | 0,0 |
| < 1-2 $\mu$m > | | | 0,0 | 0,0 |
| < 1 $\mu$m | | | 0,0 | 0,0 |

**Exemples 1 à 8.-**

Des briquettes crues sont réalisées selon l'invention avec de la chaux vive de broyage contenant des particules de tailles comprises entre 0 et 2 mm, mais présentant différent profils granulométriques et des teneurs en oxyde de fer, exprimées en équivalent $Fe_2O_3$ allant de 10% à 60%. L'oxyde de fer utilisé dans ces exemples est caractérisé par un $d_{10}$ de 0,5 $\mu$m, $d_{50}$ de 12,3 $\mu$m et $d_{90}$ de 35,7 $\mu$m. Dans chaque exemple, les particules de chaux vive de broyage de taille comprise entre 0 et 2 mm présentent au moins 30% de particules qui sont inférieures à 90 $\mu$m.

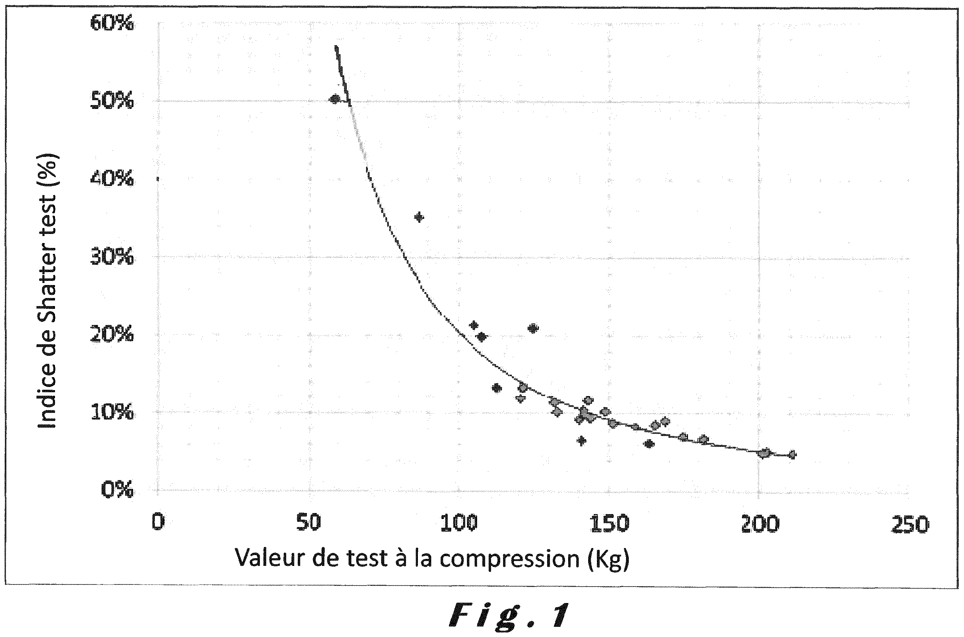

Des briquettes crues de même composition ont été traitées thermiquement à 1100°C ou à 1200°C pendant 20 minutes pour obtenir des briquettes cuites ayant différentes teneurs en chaux vive et en composés à base de fer. La composition des briquettes ainsi que les traitements thermiques réalisés sont présentés au tableau 2. Pour ces briquettes crues et cuites, plusieurs tests ont été réalisés et décrits ci-dessous à l'aide des figures 1 à 4.

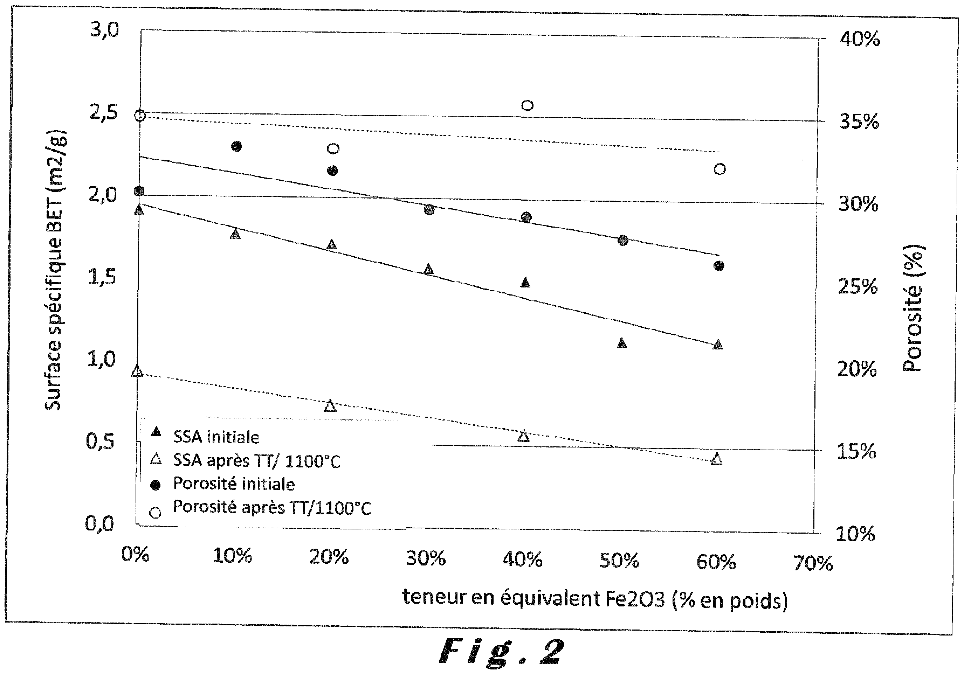

La figure 2 présente un graphique montrant :

- l'évolution de la surface spécifique (SSA) BET en fonction de la teneur en composé à base de fer exprimée en équivalent $Fe_2O_3$, pour des briquettes crues ;
- l'évolution de la porosité en fonction de la teneur en composé à base de fer exprimée en équivalent $Fe_2O_3$, pour des briquettes crues ;
- l'évolution de la surface spécifique (SSA) BET en fonction de la teneur en composé à base de fer exprimée en

équivalent $Fe_2O_3$, pour des briquettes cuites ayant été soumises à un traitement thermique (TT) de 1100°C pendant 20 minutes ; et

- l'évolution de la porosité en fonction de la teneur en composé à base de fer exprimée en équivalent $Fe_2O_3$, pour des briquettes cuites ayant été soumises à un traitement thermique (TTA) de 1100°C pendant 20 minutes.

Comme on peut le voir, ces évolutions de porosité et de surface spécifique diminuent légèrement de manière linéaire avec la teneur en composé à base de fer pour les briquettes crues et cuites. Les briquettes cuites présentent une surface spécifique inférieure à celles des briquettes crues, alors qu'elles présentent une porosité plus élevée pour des teneurs identiques en composé à base de fer.

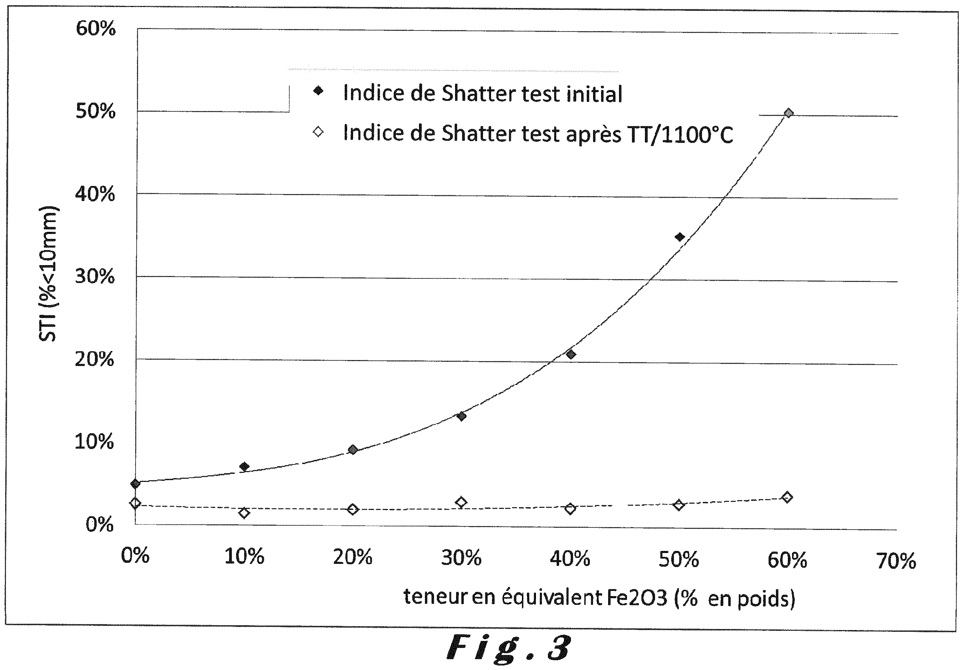

La figure 3 présente un graphique montrant :

- l'évolution de l'indice de Shatter test pour des briquettes crues, en fonction des teneurs en composé à base de fer exprimées en équivalent $Fe_2O_3$ ; et
- l'évolution de l'indice de Shatter test pour des briquettes cuites ayant été traitées thermiquement à une température (TT) de 1100°C pendant 20 minutes, en fonction des teneurs en composé à base de fer exprimé en équivalent $Fe_2O_3$.

Comme on peut le voir, les indices de Shatter tests sont inférieurs à 20 % pour des briquettes crues ayant des teneurs en composé à base de fer exprimées en équivalent $Fe_2O_3$ inférieures à 40%, alors que pour les briquettes cuites, tous les Shatter tests sont inférieurs à 10%, voire même 6%.

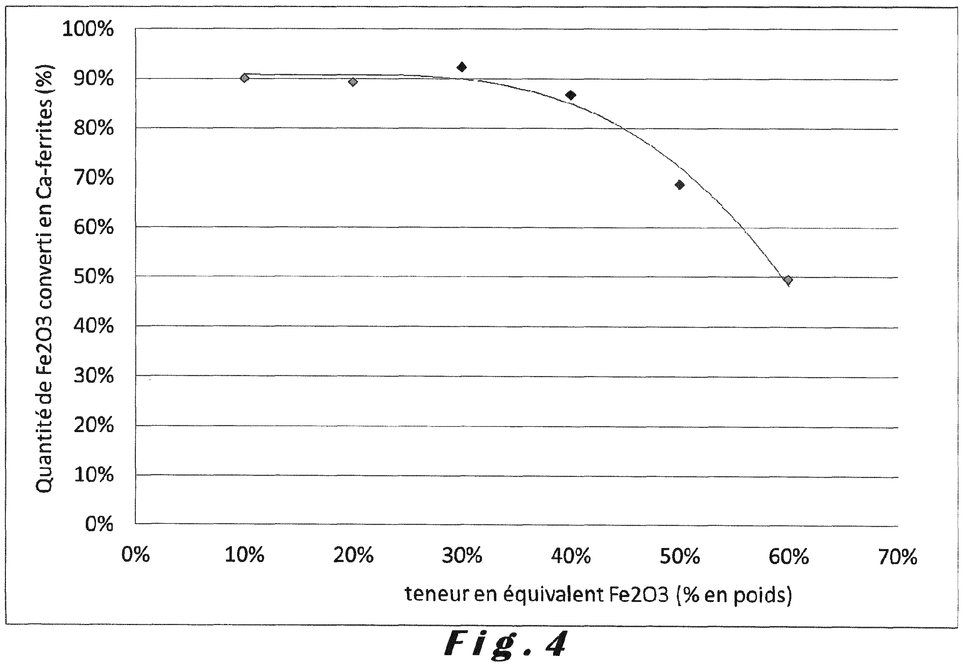

La figure 4 présente un graphique montrant l'évolution du rendement de composé à base de fer (l'oxyde de fer) converti en ferrite de calcium, en fonction de la teneur en oxyde de fer exprimée en équivalent $Fe_2O_3$.

Comme on peut le voir, le rendement de conversion en ferrite de calcium commence à diminuer pour des teneurs en oxyde de fer exprimées en équivalent $Fe_2O_3$ supérieures à 40%.

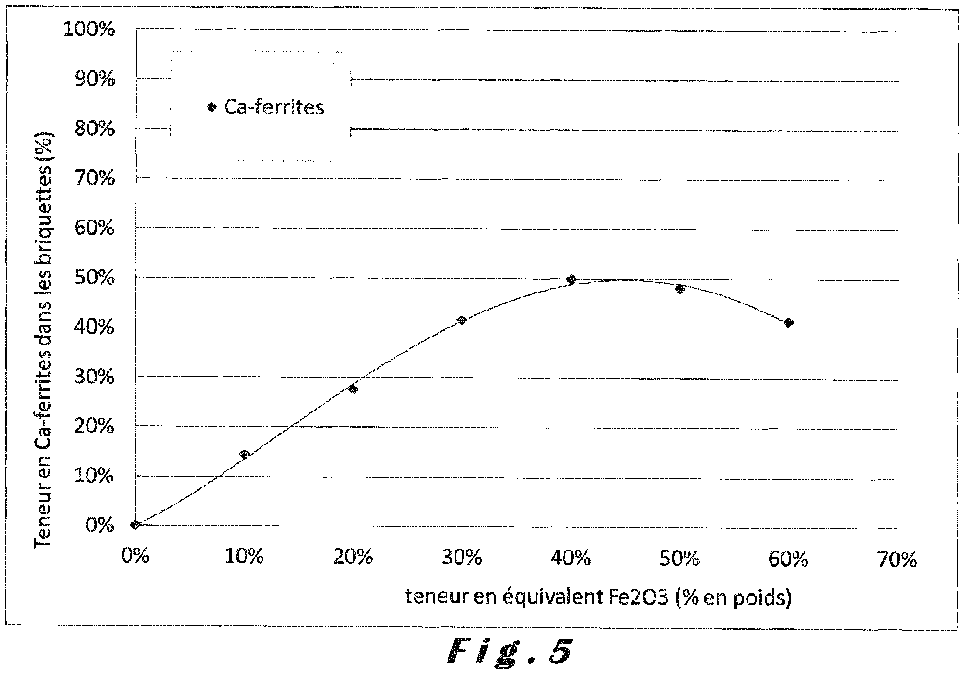

La figure 5 présente l'évolution de la teneur de ferrites de calcium exprimée en équivalent $Fe_2O_3$ dans les briquettes cuites en fonction de la teneur en oxyde de fer exprimée en équivalent $Fe_2O_3$ dans les briquettes crues avant traitement thermique.

Comme on peut le voir, les teneurs en ferrites de calcium dans les briquettes cuites augmentent avec la teneur en oxyde de fer dans les briquettes crues. Néanmoins cette évolution passe par un maximum à 50% en teneur de ferrites de calcium pour des teneurs en oxyde de fer dans les briquettes crues dans un intervalle compris entre 40 et 45%, pour diminuer ensuite à des teneurs en ferrites de calcium d'environ 40% pour des teneurs en oxyde de fer dans les briquettes crues de 60%.

Il est néanmoins possible de pousser le rendement de conversion d'oxyde de fer en ferrites de calcium au-delà de 90% et d'obtenir des teneurs en ferrites de calcium dans les briquettes cuites au-delà de 50%, même au-delà de 70% par exemple en augmentant la température du traitement thermique jusqu'à 1200°C ou en optimisant le broyage de la chaux vive de sorte à augmenter la proportion de particules de chaux vive inférieure à 90 $\mu$m, ou une combinaison de l'un et l'autre. Plusieurs exemples ont été réalisés et mesurée et présentés dans le tableau 2.

**Tableau 2.-**

| Exemples | % équivalent $Fe_2O_3$ | T° traitement thermique | Type de CaO | % conversion en ferrites de calcium | % de ferrites de calcium dans la briquette cuite |
|---|---|---|---|---|---|
| Ex. 1 | 20% | 1200°C | CaO < 2mm, dont 30% < 90$\mu$m | 95% | 31% |
| Ex. 2 | 30% | 1200°C | CaO < 2mm, dont 30% < 90$\mu$m | 98% | 47% |
| Ex. 3 | 40% | 1200°C | CaO < 2mm, dont 30% < 90$\mu$m | 98% | 58% |
| Ex. 4 | 50% | 1200°C | CaO < 2mm, dont 30% < 90$\mu$m | 97% | 74% |
| Ex. 5 | 50% | 1100°C | 50% de (CaO < 2mm, dont 30% < 90$\mu$m) + 50% de CaO < 90$\mu$m | 90% | 65% |
| Ex. 6 | 50% | 1100°C | 100% de CaO < 90$\mu$m | 96% | 73% |

(suite)

| Exemples | % équivalent Fe$_2$O$_3$ | T° traitement thermique | Type de CaO | % conversion en ferrites de calcium | % de ferrites de calcium dans la briquette cuite |
|---|---|---|---|---|---|
| Ex. 7 | 50% | 1200°C | 50% de (CaO < 2mm, dont 30% < 90μm) + 50% de CaO < 90 μm | 99% | 76% |
| Ex. 8 | 50% | 1100°C | CaO < 2mm, dont 30% < 90μm | 61% | 43% |

**Exemple comparatif 4.-**

On a comparé les indices de Shatter test à la force de compression sur plusieurs échantillons de briquettes crues pour établir la corrélation entre l'indice de Shatter test et la force de compression. Les briquettes crues testés comprenaient de la chaux vive dont la taille de particules était comprise entre 0 et 3 mm avec différentes teneurs en oxyde de fer, de 0 à 60% en poids et différentes teneurs en lubrifiant, allant de 0,125 à 0,5 % en poids, par rapport au poids total des briquettes. Les paramètres du procédé de briquetage ont également été modifiées pour assurer que la population pour établir la corrélation était suffisamment large.

Comme on peut le voir à la figure 1, il faut une force de compression supérieure à 144 kg, correspondant à 317,5 livres pour des briquettes présentant un indice de Shatter test inférieur à 10%.

Il est bien entendu que la présente invention n'est en aucune façon limitée aux formes de réalisations décrites ci-dessus et que bien des modifications peuvent y être apportées sans sortir du cadre des revendications annexées.

**Revendications**

1. Procédé de fabrication d'une composition calco-magnésienne sous forme de briquettes, comprenant les étapes suivantes :

     i. amenée d'un mélange pulvérulent homogène comprenant au moins un composé calco- magnésien vif, ledit mélange comprenant au moins 40% en poids d'équivalent CaO+MgO par rapport au poids de ladite composition et présentant un ratio molaire Ca/Mg supérieur ou égal à 1, de préférence supérieur ou égal à 2, plus particulièrement supérieur ou égal à 3;
     ii. alimentation d'une presse à rouleaux avec ledit mélange pulvérulent homogène,
     iii. compression dans ladite presse à rouleaux dudit mélange pulvérulent homogène, avec obtention d'une composition calco-magnésienne sous forme de briquettes crues, et
     iv. collecte desdites briquettes crues.

     **caractérisé en ce que** ledit mélange pulvérulent comprend en outre un composé à base de fer présent à une teneur d'au moins 12%, préférablement au moins 20 %, de manière préférée au moins 30%, plus préférablement au moins 35% en poids d'équivalent Fe$_2$0$_3$ par rapport au poids de ladite composition, ledit composé à base de fer présentant une distribution granulométrique très fine **caractérisée par** une taille médiane $d_{50}$ inférieure à 100 μm, préférablement inférieure à 50 μm ainsi qu'une taille $d_{90}$ inférieure à 200 μm, de préférence inférieure à 150 μm, préférablement inférieure à 130 μm, plus préférablement inférieure à 100 μm, et **en ce que** lesdits rouleaux de la presse à rouleaux développent des vitesses linéaires en périphérie des rouleaux comprises entre 10 et 100 cm/s, préférentiellement comprises entre 20 et 80 cm/s, et des pressions linéaires comprises entre 60 et 160 kN/cm, préférentiellement comprises entre 80 et 140 kN/cm, et de manière encore plus préférentielle comprises entre 80 et 120 kN/cm.

2. Procédé selon la revendication 1, dans lequel ladite étape de compression s'effectue en présence d'un liant ou d'un lubrifiant, plus particulièrement choisi dans le groupe constitué des liants d'origine minérale tels que les ciments, les argiles, les silicates, des liants d'origine végétale ou animale, tels que les celluloses, les amidons, les gommes, les alginates, la pectine, les colles, des liants d'origine synthétique, tels que les polymères, les cires, des lubrifiants liquides tels que des huiles minérales ou des silicones, des lubrifiants solides tels que le talc, le graphite, les paraffines, les stéarates, en particulier le stéarate de calcium, le stéarate de magnésium et leurs mélanges, de préférence du stéarate de calcium et/ou du stéarate de magnésium, à une teneur comprise entre 0,1 et 1 % en poids, de préférence entre 0,15 et 0,6 % en poids, de manière plus préférentielle entre 0,2 et 0,5 % en poids par rapport au poids total desdites briquettes.

3. Procédé selon la revendication 1 ou 2 comprenant en outre un traitement thermique desdites briquettes crues à une température comprise entre 900°C et 1200°C, de préférence comprise entre 1050 °C et 1200°C, de préférence comprise entre 1100°C et 1200°C.

4. Procédé selon l'une quelconque des revendications 1 à 3 comprenant une étape de traitement thermique desdites briquettes crues pendant une durée prédéterminée comprise entre 3 et 20 minutes, de préférence supérieure ou égale à 5 minutes et inférieure ou égale à 15 minutes.

5. Procédé selon l'une quelconque des revendications 1 à 4, dans lequel ledit composé calco-magnésien vif est de la chaux vive.

6. Procédé selon l'une quelconque des revendications 1 à 5, comprenant en outre, avant ladite amenée d'un mélange pulvérulent homogène,

   i. une alimentation d'un mélangeur avec a moins 40 % en poids d'équivalent CaO+ MgO d'un composé calco-magnésien vif par rapport au poids de ladite composition et avec au moins 12%, plus préférablement au moins 20%, de manière préférée au moins 30%, plus préférablement au moins 35% en poids d'équivalent $Fe_2O_3$ d'un composé à base de fer par rapport au poids de ladite composition, ledit composé à base de fer présentant une distribution granulométrique très fine **caractérisée par** une taille médiane $d_{50}$ inférieure à 100 $\mu$m, préférablement inférieure à 50 $\mu$m ainsi qu'une taille $d_{90}$ inférieure à 200 $\mu$m, de préférence inférieure à 150 $\mu$m, préférablement inférieure à 130 $\mu$m, plus préférentiellement inférieure à 100 $\mu$m ;
   ii. un mélange dudit composé calco-magnésien vif avec ledit composé à base de fer pendant une période prédéterminée, suffisante pour obtenir un mélange pulvérulent sensiblement homogène dudit composé calco-magnésien vif et dudit composé à base de fer.

7. Procédé selon la revendication 6, dans laquelle ledit liant ou lubrifiant est ajouté au mélangeur, et dans lequel ledit liant ou lubrifiant est inclus dans ledit mélange pulvérulent homogène.

8. Procédé selon l'une quelconque des revendications 1 à 7, dans lequel ledit composé calco-magnésien vif contient au moins 10% en poids de chaux vive sous forme de particules broyées.

9. Procédé selon l'une quelconque des revendications 1 à 8, comprenant en outre un prétraitement des briquettes sous atmosphère modifiée contenant au moins 2% en volume de C02et au plus 30 % en volume de C02, de préférence au plus 25% en volume de C02, préférentiellement au plus 20% en volume de C02, plus préférentiellement au plus 15% en volume de C02, plus préférentiellement encore au plus 10% en volume de C02par rapport à ladite atmosphère modifiée.

10. Composition sous forme de briquettes crues comprenant au moins un composé calco-magnésien vif et un composé à base de fer **caractérisée en ce que** la composition comprend au moins 40% en poids d'équivalent CaO+MgO par rapport au poids de ladite composition, ladite composition présentant un ratio molaire Ca/Mg supérieur ou égal à 1, de préférence supérieur ou égal à 2, plus préférentiellement supérieur ou égal à 3 et **caractérisée en ce que** ledit composé à base de fer est présent à une teneur d'au moins 12%, plus préférablement au moins 20%, de manière préférée au moins 30%, plus préférablement au moins 35% en poids d'équivalent $Fe_2O_3$ par rapport au poids de ladite composition, ledit composé à base de fer présentant une distribution granulométrique très fine **caractérisée par** une taille médiane $d_{50}$ inférieure à 100 $\mu$m, préférablement inférieure à 50 $\mu$m ainsi qu'une taille $d_{90}$ inférieure à 200 $\mu$m, de préférence inférieure à 150 $\mu$m, préférablement inférieure à 130 $\mu$m, plus préférablement inférieure à 100 $\mu$m.

11. Composition sous forme de briquettes crues selon la revendication 10, dans laquelle ledit composé calco-magnésien est de la chaux vive.

12. Composition sous forme de briquettes crues selon la revendication 10 ou 11 dans laquelle ledit composé calco-magnésien vif comprend :

   - des particules fines de composé calco-magnésien choisies parmi des particules fines rejetées au criblage de la production des galets dudit composé calco-magnésien vif, des poussière calco- magnésiennes de filtre à une concentration de 0% en poids à 90 % en poids par rapport au poids total dudit composé calco-magnésien vif et ;
- de 10 et 100% en poids de chaux vive sous forme de particules broyées, par rapport au poids total dudit composé calco-magnésien vif.

13. Composition sous forme de briquettes crues selon l'une quelconque des revendications 10 à 12, présentant une surface spécifique BET supérieure ou égale à 1 $m^2$/g, de préférence supérieure ou égale à 1,2 $m^2$/g, de manière plus préférentielle supérieure ou égale à 1,4 $m^2$/g.

14. Composition sous forme de briquettes crues selon l'une quelconque des revendications 10 à 13, présentant une porosité supérieure ou égale à 20%, de préférence supérieure ou égale à 22 %, de manière plus préférentielle supérieure ou égale à 24%.

15. Composition sous forme de briquettes crues selon l'une quelconque des revendications 10 à 14, présentant une réactivité à l'eau élevée définie par une valeur de t6o inférieure à 10 min, préférentiellement inférieure à 8 min, préférentiellement inférieure à 6 min, et encore préférentiellement inférieure à 4 min.

16. Composition sous forme de briquettes crues selon l'une quelconque des revendications 10 à 15, comprenant en outre un liant ou un lubrifiant, plus particulièrement choisi dans le groupe constitué des liants d'origine minérale tels que les ciments, les argiles, les silicates, des liants d'origine végétale ou animale, tels que les celluloses, les amidons, les gommes, les alginates, la pectine, les colles, des liants d'origine synthétique, tels que les polymères, les cires, des lubrifiants liquides tels que des huiles minérales ou des silicones, des lubrifiants solides tels que le talc, le graphite, les paraffines, les stéarates, en particulier le stéarate de calcium, le stéarate de magnésium, et de leurs mélanges, de préférence du stéarate de calcium et/ou du stéarate de magnésium, à une teneur comprise entre 0,1 et 1 % en poids, de préférence entre 0,15 et 0,6 % en poids, de manière plus préférentielle entre 0,2 et 0,5 % en poids par rapport au poids total desdites briquettes.

17. Composition sous forme de briquettes cuites, comprenant au moins un composé à base de fer, ladite composition comprenant au moins 40% en poids d'équivalent CaO+MgO par rapport au poids de ladite composition et présentant un ratio molaire Ca/Mg supérieur ou égal à 1, de préférence supérieur ou égal à 2, plus préférentiellement supérieur ou égal à 3, **caractérisé en ce que** ledit composé à base de fer est présent à une teneur d'au moins 12%, plus préférablement au moins 20%, de manière préférée au moins 30%, plus préférablement au moins 35% en poids d'équivalent $Fe_2O_3$ par rapport au poids de ladite composition, ledit composé à base de fer comprenant au moins 40% de ferrite de calcium, exprimé en poids d'équivalent $Fe_2O_3$, par rapport au poids total dudit composé à base de fer exprimé en poids d'équivalent $Fe_2O_3$.

18. Composition sous forme de briquettes cuites selon la revendication 17, dans laquelle ledit composé à base de fer comprend au moins 50%, de préférence au moins 60%, et de manière encore plus préférentielle au moins 70% en poids de ferrite de calcium par rapport au poids total dudit composé à base de fer.

19. Composition sous forme de briquettes cuites selon l'une quelconque des revendications 17 ou 18, présentant une surface spécifique BET supérieure ou égale à 0,4 $m^2$/g, de préférence supérieure ou égale à 0,6 $m^2$/g, de manière plus préférentielle supérieure ou égale à 0,8 $m^2$/g.

20. Composition sous forme de briquettes cuites selon l'une quelconque des revendications 17 à 19, présentant une porosité supérieure ou égale à 20%, de préférence supérieure ou égale à 22 %, de manière plus préférentielle supérieure ou égale à 24%.

21. Composition sous forme de briquettes cuites selon l'une quelconque des revendications 17 à 20, présentant une réactivité à l'eau élevée définie par une valeur de $t_{60}$ inférieure à 10 min, préférentiellement inférieure à 8 min, préférentiellement inférieure à 6 min, et encore préférentiellement inférieure à 4 min.

22. Composition sous forme de briquettes cuites selon l'une quelconque des revendications 17 à 21, dans laquelle les briquettes cuites présentant un indice de Shatter test inférieur à 8 %, de préférence inférieur à 6 %, de préférence inférieur à 4 %, et de manière encore préférée inférieur à 3 %, en particulier inférieur à 2 %, ledit indice de Shatter test étant le pourcentage massique des fines inférieures à 10 mm générées à l'issue de 4 chutes de 2 m au départ de 10kg de produit, les fines étant quantifiées au moyen d'un tamisage au travers un crible à mailles carrées de 10 mm à l'issue des 4 chutes de 2 m.

23. Utilisation d'une composition sous forme de briquettes crues selon l'une quelconque des revendications 10 à 16 ou sous forme de briquettes cuites selon l'une quelconque des revendications 17 à 22 dans la sidérurgie, en particulier dans les convertisseurs à oxygène ou bien dans les fours à arcs électriques.

24. Utilisation selon la revendication 23, dans des convertisseurs à oxygène ou dans des fours à arcs électriques, en mélange avec des briquettes de composés calco-magnésien vifs ou avec des galets de composé calco-magnésien vifs.

25. Utilisation d'une composition sous forme de briquettes crues selon l'une quelconque des revendications 10 à 16 ou sous forme de briquettes cuites selon l'une quelconque des revendications 17 à 22 dans un procédé de raffinage de métal fondu, en particulier de déphosphoration de métal fondu et/ou de désulfurisation de métal fondu et/ou de réduction de perte en métal raffiné dans le laitier.

26. Utilisation selon la revendication 25, comprenant :

- au moins une étape d'introduction de métal chaud et éventuellement de déchets à base de fer dans une cuve,
- au moins une étape d'introduction d'une composition sous forme de briquettes crues selon l'une quelconque des revendications 10 à 16 ou sous forme de briquettes cuites selon l'une quelconque des revendications 17 à 22 dans ladite cuve, de préférence, sous forme de briquettes cuites selon l'une quelconque des revendications 17 à 22,
- au moins une étape de soufflage d'oxygène dans ladite cuve,
- au moins une étape de formation d'un laitier avec ladite composition de briquettes dans ladite cuve,
- au moins une étape d'obtention de métal raffiné ayant une teneur réduite en composés phosphorés et/ou soufrés à partir du métal chaud par déphosphoration et/ou désulfuration, et/ou augmentée en métal raffiné,
- au moins une étape de déchargement dudit métal raffiné ayant une teneur réduite en composants phosphorés et/ou soufrés et/ou augmentée en métal raffiné.

27. Utilisation selon la revendication 26 , comprenant en outre une étape d'ajout de chaux vive, de préférence de la chaux vive en roche ou des compacts de chaux vive, en particulier de tablettes ou de briquettes de chaux vive.

**Patentansprüche**

1. Verfahren zur Herstellung einer Calcium-Magnesium-Zusammensetzung in Form von Briketts, umfassend die folgenden Schritte:

i. Zuführen einer homogenen pulverförmigen Mischung, die mindestens eine gebrannte Calcium-Magnesium-Verbindung umfasst, wobei die Mischung mindestens 40 Gew.-% CaO+MgO-Äquivalent, bezogen auf das Gewicht der Zusammensetzung, umfasst und ein Ca/Mg-Stoffmengenverhältnis größer als oder gleich 1, vorzugsweise größer als oder gleich 2, insbesondere größer als oder gleich 3 aufweist;
ii. Beschicken einer Walzenpresse mit der homogenen pulverförmigen Mischung,
iii. Pressen der homogenen pulverförmigen Mischung in der Walzenpresse zum Erhalt einer Calcium-Magnesium-Zusammensetzung in Form von Rohbriketts und
iv. Sammeln der Rohbriketts;

**dadurch gekennzeichnet, dass** die pulverförmige Mischung weiter eine Verbindung auf Eisenbasis umfasst, die mit einem Gehalt von mindestens 12 Gew.-%, bevorzugt mindestens 20 Gew.-%, auf bevorzugte Weise mindestens 30 Gew.-%, bevorzugter mindestens 35 Gew.-% $Fe_2O_3$-Äquivalent, bezogen auf das Gewicht der Zusammensetzung, vorhanden ist, wobei die Verbindung auf Eisenbasis eine sehr feine Korngrößenverteilung aufweist, die durch eine mediane Größe $d_{50}$ von weniger als 100 $\mu$m, bevorzugt weniger als 50 $\mu$m, sowie eine Größe $d_{90}$ von weniger als 200 $\mu$m, vorzugsweise weniger als 150 $\mu$m, bevorzugt weniger als 130 $\mu$m, noch bevorzugter weniger als 100 $\mu$m und dadurch, dass die Walzen der Walzenpresse lineare Walzenumfangsgeschwindigkeiten zwischen 10 und 100 cm/s, präferentiell zwischen 20 und 80 cm/s und Lineardrücke zwischen 60 und 160 kN/cm, präferentiell zwischen 80 und 140 kN/cm und auf noch präferentiellere Weise zwischen 80 und 120 kN/cm entwickeln.

2. Verfahren nach Anspruch 1, wobei der Schritt des Pressens in Gegenwart eines Bindemittels oder eines Gleitmittels erfolgt, das insbesondere ausgewählt ist aus der Gruppe bestehend aus Bindemitteln mineralischen Ursprungs wie den Zementen, den Tonerden, den Silicaten, Bindemitteln pflanzlichen oder tierischen Ursprungs wie den Cellulosen, den Stärken, den Gummen, den Alginaten, dem Pektin, den Klebstoffen, Bindemitteln synthetischen Ursprungs wie den Polymeren, den Wachsen, flüssigen Gleitmitteln wie Mineralölen oder Siliconen, festen Gleitmitteln wie Talk, Graphit, den Paraffinen, den Stearaten, insbesondere dem Calciumstearat, dem Magnesiumstearat und deren Mischungen, vorzugsweise Calciumstearat und/oder Magnesiumstearat, mit einem Gehalt zwischen 0,1 und 1 Gew.-%, vorzugsweise zwischen 0,15 und 0,6 Gew.-%, auf bevorzugtere Weise zwischen 0,2 und 0,5 Gew.-%, bezogen auf das Gesamtgewicht der Briketts.

3. Verfahren nach Anspruch 1 oder 2, weiter umfassend eine thermische Behandlung der Rohbriketts bei einer Temperatur zwischen 900 °C und 1200 °C, vorzugsweise zwischen 1050 °C und 1200 °C, auf bevorzugtere Weise zwischen 1100 °C und 1200 °C.

4. Verfahren nach einem der Ansprüche 1 bis 3, umfassend einen Schritt der thermischen Behandlung der Rohbriketts für eine vorbestimmte Dauer zwischen 3 und 20 Minuten, vorzugsweise größer als oder gleich 5 Minuten und kleiner als oder gleich 15 Minuten.

5. Verfahren nach einem der Ansprüche 1 bis 4, wobei es sich bei der gebrannten Calcium-Magnesium-Verbindung um gebrannten Kalk handelt.

6. Verfahren nach einem der Ansprüche 1 bis 5, weiter umfassend vor dem Zuführen einer homogenen pulverförmigen Mischung,

   i. ein Beschicken eines Mischers mit mindestens 40 Gew.-% CaO+MgO-Äquivalent einer gebrannten Calcium-Magnesium-Verbindung, bezogen auf das Gewicht der Zusammensetzung, und mit mindestens 12 Gew.-%, bevorzugter mindestens 20 Gew.-%, auf bevorzugte Weise mindestens 30 Gew.-%, bevorzugter mindestens 35 Gew.-% $Fe_2O_3$-Äquivalent einer Verbindung auf Eisenbasis, bezogen auf das Gewicht der Zusammensetzung, wobei die Verbindung auf Eisenbasis eine sehr feine Korngrößenverteilung aufweist, die durch eine mediane Größe $d_{50}$ von weniger als 100 $\mu m$, bevorzugt weniger als 50 $\mu m$ sowie eine Größe $d_{90}$ von weniger als 200 $\mu m$, vorzugsweise weniger als 150 $\mu m$, bevorzugt weniger als 130 $\mu m$, präferentieller weniger als 100 $\mu m$ gekennzeichnet ist;
   ii. ein Mischen der gebrannten Calcium-Magnesium-Verbindung mit der Verbindung auf Eisenbasis für einen vorbestimmten Zeitraum, der ausreichend ist, um eine im Wesentlichen homogene pulverförmige Mischung der gebrannten Calcium-Magnesium-Verbindung und der Verbindung auf Eisenbasis zu erhalten.

7. Verfahren nach Anspruch 6, wobei das Bindemittel oder Gleitmittel zum Mischer gegeben wird und wobei das Bindemittel oder Gleitmittel in die homogene pulverförmige Mischung eingeschlossen ist.

8. Verfahren nach einem der Ansprüche 1 bis 7, wobei die gebrannte Calcium-Magnesium-Verbindung mindestens 10 Gew.-% gebrannten Kalk in Form von gemahlenen Partikeln enthält.

9. Verfahren nach einem der Ansprüche 1 bis 8, weiter umfassend eine Vorbehandlung der Briketts unter einer modifizierten Atmosphäre, die mindestens 2 Vol.-% $CO_2$ und höchstens 30 Vol.-% $CO_2$, vorzugsweise höchstens 25 Vol.-% $CO_2$, präferentiell höchstens 20 Vol.-% $CO_2$, präferentieller höchstens 15 Vol.-% $CO_2$, noch präferentieller höchstens 10 Vol.-% $CO_2$, bezogen auf die modifizierte Atmosphäre, enthält.

10. Zusammensetzung in Form von Rohbriketts, umfassend mindestens eine gebrannte Calcium-Magnesium-Verbindung und eine Verbindung auf Eisenbasis, **dadurch gekennzeichnet, dass** die Zusammensetzung mindestens 40 Gew.-% CaO+MgO-Äquivalent, bezogen auf das Gewicht der Zusammensetzung, umfasst, wobei die Zusammensetzung ein Ca/Mg-Stoffmengenverhältnis von größer als oder gleich 1, vorzugsweise größer als oder gleich 2, präferentieller größer als oder gleich 3 aufweist, und **dadurch gekennzeichnet, dass** die Verbindung auf Eisenbasis mit einem Gehalt von mindestens 12 Gew.-%, bevorzugter mindestens 20 Gew.-%, auf bevorzugte Weise mindestens 30 Gew.-%, noch bevorzugter mindestens 35 Gew.-% $Fe_2O_3$-Äquivalent, bezogen auf das Gewicht der Zusammensetzung, vorhanden ist, wobei die Verbindung auf Eisenbasis eine sehr feine Korngrößenverteilung aufweist, die durch eine mediane Größe $d_{50}$ von weniger als 100 $\mu m$, bevorzugt weniger als 50 $\mu m$, sowie eine Größe $d_{90}$ von weniger als 200 $\mu m$, vorzugsweise weniger als 150 $\mu m$, bevorzugt weniger als 130 $\mu m$, bevorzugter weniger als 100 $\mu m$ gekennzeichnet ist.

**11.** Zusammensetzung in Form von Rohbriketts nach Anspruch 10, wobei es sich bei der Calcium-Magnesium-Verbindung um gebrannten Kalk handelt.

**12.** Zusammensetzung in Form von Rohbriketts nach Anspruch 10 oder 11, wobei die gebrannte Calcium-Magnesium-Verbindung Folgendes umfasst:

- feine Partikel der Calcium-Magnesium-Verbindung, die ausgewählt sind aus feinen Partikeln, die bei der Herstellung der gebrannten Calcium-Magnesium-Verbindung beim Absieben emittiert werden, Calcium-Magnesium-Filterstäuben mit einer Konzentration von 0 Gew.-% bis 90 Gew.-%, bezogen auf das Gesamtgewicht der gebrannten Calcium-Magnesium-Verbindung, und
- 10 und 100 Gew.-% gebrannten Kalk in Form von gemahlenen Partikeln, bezogen auf das Gesamtgewicht der gebrannten Calcium-Magnesium-Verbindung.

**13.** Zusammensetzung in Form von Rohbriketts nach einem der Ansprüche 10 bis 12, die eine spezifische BET-Oberfläche von mehr als oder gleich 1 $m^2$/g, vorzugsweise größer als oder gleich 1,2 $m^2$/g, auf präferentiellere Weise größer als oder gleich 1,4 $m^2$/g aufweisen.

**14.** Zusammensetzung in Form von Rohbriketts nach einem der Ansprüche 10 bis 13, die eine Porosität von mehr als oder gleich 20 %, vorzugsweise größer als oder gleich 22 %, auf präferentiellere Weise größer als oder gleich 24 % aufweisen.

**15.** Zusammensetzung in Form von Rohbriketts nach einem der Ansprüche 10 bis 14, die eine erhöhte Reaktivität gegenüber Wasser aufweisen, die durch einen t60-Wert von weniger als 10 min, präferentiell weniger als 8 min, präferentiell weniger als 6 min und noch präferentieller von weniger als 4 min definiert ist.

**16.** Zusammensetzung in Form von Rohbriketts nach einem der Ansprüche 10 bis 15, weiter umfassend ein Bindemittel oder ein Gleitmittel, das insbesondere ausgewählt ist aus der Gruppe bestehend aus Bindemitteln mineralischen Ursprungs wie den Zementen, den Tonerden, den Silicaten, Bindemitteln pflanzlichen oder tierischen Ursprungs wie den Cellulosen, den Stärken, den Gummen, den Alginaten, dem Pektin, den Klebstoffen, Bindemitteln synthetischen Ursprungs wie den Polymeren, den Wachsen, flüssigen Gleitmitteln wie Mineralölen oder Siliconen, festen Gleitmitteln wie Talk, Graphit, den Paraffinen, den Stearaten, insbesondere dem Calciumstearat, dem Magnesiumstearat und deren Mischungen, vorzugsweise Calciumstearat und/oder Magnesiumstearat, mit einem Gehalt zwischen 0,1 und 1 Gew.-%, vorzugsweise zwischen 0,15 und 0,6 Gew.-%, auf präferentiellere Weise zwischen 0,2 und 0,5 Gew.-%, bezogen auf das Gesamtgewicht der Briketts.

**17.** Zusammensetzung in Form von gebrannten Briketts, umfassend mindestens eine Verbindung auf Eisenbasis, wobei die Zusammensetzung mindestens 40 Gew.-% CaO+MgO-Äquivalent, bezogen auf das Gewicht der Zusammensetzung, umfasst, und ein Ca/Mg-Stoffmengenverhältnis von größer als oder gleich 1, vorzugsweise größer als oder gleich 2, präferentieller größer als oder gleich 3 aufweist, **dadurch gekennzeichnet, dass** die Verbindung auf Eisenbasis mit einem Gehalt von mindestens 12 Gew.-%, bevorzugter mindestens 20 Gew.-%, auf bevorzugte Weise mindestens 30 Gew.-%, noch bevorzugter mindestens 35 Gew.-% $Fe_2O_3$-Äquivalent, bezogen auf das Gewicht der Zusammensetzung, vorhanden ist, wobei die Verbindung auf Eisenbasis mindestens 40 % Calciumferrit, ausgedrückt als $Fe_2O_3$-Äquivalentgewicht, bezogen auf das Gesamtgewicht der Verbindung auf Eisenbasis, ausgedrückt als $Fe_2O_3$-Äquivalentgewicht, umfasst.

**18.** Zusammensetzung in Form von gebrannten Briketts nach Anspruch 17, wobei die Verbindung auf Eisenbasis mindestens 50 Gew.-%, vorzugsweise mindestens 60 Gew.-% und auf noch präferentiellere Weise mindestens 70 Gew.-% Calciumferrit, bezogen auf das Gesamtgewicht der Verbindung auf Eisenbasis, umfasst.

**19.** Zusammensetzung in Form von gebrannten Briketts nach einem der Ansprüche 17 bis 18, die eine spezifische BET-Oberfläche von mehr als oder gleich 0,4 $m^2$/g, vorzugsweise größer als oder gleich 0,6 $m^2$/g, auf präferentiellere Weise größer als oder gleich 0,8 $m^2$/g aufweisen.

**20.** Zusammensetzung in Form von gebrannten Briketts nach einem der Ansprüche 17 bis 19, die eine Porosität von mehr als oder gleich 20 %, vorzugsweise größer als oder gleich 22 %, auf präferentiellere Weise größer als oder gleich 24 % aufweisen.

**21.** Zusammensetzung in Form von gebrannten Briketts nach einem der Ansprüche 17 bis 20, die eine erhöhte Reaktivität gegenüber Wasser aufweisen, die durch einen $t_{60}$-Wert von weniger als 10 min, präferentiell weniger als 8 min, präferentiell weniger als 6 min und noch präferentieller von weniger als 4 min definiert ist.

22. Zusammensetzung in Form von gebrannten Briketts nach einem der Ansprüche 17 bis 21, wobei die gebrannten Briketts einen Sturzfestigkeitsindex von weniger als 8 %, vorzugsweise weniger als 6 %, vorzugsweise weniger als 4 % und auf noch bevorzugtere Weise von weniger als 3 %, insbesondere weniger als 2 % aufweisen, wobei der Sturzfestigkeitsindex der Gewichtsprozentanteil der Feinfraktion unter 10 mm, der nach 4 Stürzen aus 2 m Höhe entsteht, ausgehend von 10 kg Produkt, wobei die Feinfraktion mittels eines Siebens durch ein Sieb mit quadratischen Maschen von 10 mm nach den 4 Stürzen aus 2 m Höhe quantifiziert sind.

23. Verwendung einer Zusammensetzung in Form von Rohbriketts nach einem der Ansprüche 10 bis 16 oder in Form von gebrannten Briketts nach einem der Ansprüche 17 bis 22 in der Eisen- und Stahlindustrie, insbesondere in Sauerstoffkonvertern oder Lichtbogenöfen.

24. Verwendung nach Anspruch 23 in Sauerstoffkonvertern oder in Lichtbogenöfen im Gemisch mit Briketts aus gebrannten Calcium-Magnesium-Verbindungen oder mit Kies aus gebrannten Calcium-Magnesium-Verbindungen.

25. Verwendung einer Zusammensetzung in Form von Rohbriketts nach einem der Ansprüche 10 bis 16 oder in Form von gebrannten Briketts nach einem der Ansprüche 17 bis 22 in einem Verfahren zum Frischen von geschmolzenem Metall, insbesondere zur Entphosphorung von geschmolzenem Metall und/oder zur Entschwefelung von geschmolzenem Metall und/oder zur Reduzierung von Verlusten an gefrischtem Metall in der Schlacke.

26. Verwendung nach Anspruch 25, umfassend:

- mindestens einen Schritt des Einführens von heißem Metall und gegebenenfalls von Abfällen auf Eisenbasis in ein Gefäß,
- mindestens einen Schritt des Einführens einer Zusammensetzung in Form von Rohbriketts nach einem der Ansprüche 10 bis 16 oder in Form von gebrannten Briketts nach einem der Ansprüche 17 bis 22 in die Wanne, vorzugsweise in Form von gebrannten Briketts nach einem der Ansprüche 17 bis 22,
- mindestens einen Schritt des Blasens von Sauerstoff in besagtes Gefäß,
- mindestens einen Schritt des Bildens einer Schlacke mit der Brikettzusammensetzung in besagtem Gefäß,
- mindestens einen Schritt des Erhalts von gefrischtem Metall mit einem reduzierten Gehalt von Phosphor- und/oder Schwefelverbindungen aus dem heißen Metall durch Entphosphorung und/oder Entschwefelung und/oder einem erhöhten Gehalt an gefrischtem Metall,
- mindestens einen Schritt der Entnahme des gefrischten Metalls mit einem reduzierten Gehalt an Phosphor- und/oder Schwefelkomponenten und/oder einem erhöhten Gehalt an gefrischtem Metall.

27. Verwendung nach Anspruch 26, weiter umfassend einen Schritt der Zugabe von gebranntem Kalk, vorzugsweise stückigem gebranntem Kalk oder Presskörpern aus gebranntem Kalk, insbesondere Tabletten oder Briketts aus gebranntem Kalk.

**Claims**

1. Method for manufacturing a calcium-magnesium composition in the form of briquettes, comprising the following steps:

i. providing a homogeneous powder mixture comprising at least one quick calcium-magnesium compound, said mixture comprising at least 40 wt% of CaO+MgO equivalent with respect to the weight of said composition and having a Ca/Mg molar ratio of greater than or equal to 1, preferably greater than or equal to 2, more particularly greater than or equal to 3;
ii. supplying a roller press with said homogeneous powder mixture,
iii. compressing said homogeneous powder mixture in said roller press and obtaining a calcium-magnesium composition in the form of green briquettes, and
iv. collecting said green briquettes;

characterised in that said powder mixture further comprises an iron-based compound present in an amount of at least 12 wt%, preferably at least 20 wt%, preferably at least 30 wt%, more preferably at least 35 wt% of $Fe_2O_3$ equivalent with respect to the weight of said composition, said iron-based compound having a very fine particle size distribution **characterised by** a median size d$_{50}$ of less than 100$\mu$m, preferably less than 50$\mu$m as well as a size d$_{90}$ of less than 200$\mu$m, preferably less than 150$\mu$m, preferably less than 130$\mu$m, more preferably less than 100$\mu$m, and **in that** said rollers of the roller press develop linear speeds on the circumfence of the rollers ranging between 10 and 100cm/s, preferably ranging between 20 and 80cm/s, and linear pressures ranging between 60 and 160kN/cm, preferentially ranging between 80 and 140kN/cm, and even more preferentially ranging between 80 and 120kN/cm.

2. Method according to claim 1, wherein said compressing step is carried out in the presence of a binder or a lubricant, more particularly chosen from the group formed of binders of mineral origin, such as cements, clays, silicates, binders of plant or animal origin, such as celluloses, starches, gums, alginates, pectin, glues, binders of synthetic origin, such as polymers, waxes, liquid lubricants such as mineral or silicone oils, solid lubricants such as talc, graphite, paraffins, stearates, in particular calcium stearate, magnesium stearate and mixtures thereof, preferably calcium stearate and/or magnesium stearate, in an amount ranging between 0.1 and 1 wt%, preferably between 0.15 and 0.6 wt%, more preferentially between 0.2 and 0.5 wt% with respect to the total weight of said briquettes.

3. Method according to claim 1 or 2, further comprising a thermal treatment of said green briquettes at a temperature ranging between 900°C and 1200°C, preferably ranging between 1050°C and 1200°C, preferably ranging between 1100°C and 1200°C.

4. Method according to any one of claims 1 to 3, comprising a step of thermal treatment of said green briquettes for a predetermined period ranging between 3 and 20 minutes, preferably greater than or equal to 5 minutes and less than or equal to 15 minutes.

5. Method according to any one of claims 1 to 4, wherein said quick calcium-magnesium mixture is quicklime.

6. Method according to any one of claims 1 to 5, further comprising, before said provision of a homogeneous powder mixture,

    i. supplying a mixer with at least 40 wt% of CaO+MgO equivalent of a quick calcium-magnesium compound with respect to the weight of said composition and with at least 12 wt%, more preferably at least 20 wt%, preferably at least 30 wt%, more preferably at least 35 wt% of Fe$_2$O$_3$ equivalent of an iron-based compound with respect to the weight of said composition, said iron-based compound having a very fine particle size distribution **characterised by** a median size d$_{50}$ of less than 100$\mu$m, preferably less than 50$\mu$m as well as a size d$_{90}$ of less than 200$\mu$m, preferably less than 150$\mu$m, preferably less than 130$\mu$m, more preferentially less than 100$\mu$m;
    ii. mixing said quick calcium-magnesium compound with said iron-based compound over a predetermined period, sufficient for obtaining a substantially homogeneous powder mixture of said quick calcium-magnesium compound and said iron-based compound.

7. Method according to claim 6, wherein said binder or lubricant is added to the mixer, and wherein said binder or lubricant is included in said homogeneous powder mixture.

8. Method according to any one of claims 1 to 7, wherein said quick calcium-magnesium compound contains at least 10 wt% of quicklime in the form of ground particles.

9. Method according to any one of claims 1 to 8, further comprising pre-treatment of the briquettes in a modified atmosphere containing at least 2 vol% CO$_2$ and at most 30 vol% CO$_2$, preferably at most 35 vol% CO$_2$, preferentially at most 20 vol% CO$_2$, more preferentially at most 15 vol% CO$_2$, even more preferentially at most 10 vol% CO$_2$ with respect to said modified atmosphere.

10. Composition in the form of green briquettes comprising at least one quick calcium-magnesium compound and one iron-based compound, **characterised in that** the composition comprises at least 40 wt% equivalent of CaO+MgO with respect to the weight of said composition, said composition having a Ca/Mg molar ratio of greater than or equal to 1, preferably greater than or equal to 2, more preferentially greater than or equal to 3 and **characterised in that** said iron-based compound is present in an amount of at least 12 wt%, more preferably at least 20 wt%, preferably at least 30 wt%, more preferably at least 35 wt% of Fe$_2$O$_3$ equivalent with respect to the weight of said composition, said iron-based compound having a very fine particle size distribution **characterised by** a median size d$_{50}$ of less than 100$\mu$m, preferably less than 50$\mu$m as well as a size d$_{90}$ of less than 200$\mu$m, preferably less than 150$\mu$m, preferably less than 130$\mu$m, more preferably less than 100$\mu$m.

11. Composition in the form of green briquettes according to claim 10, wherein said calcium-magnesium compound is quicklime.

12. Composition in the form of green briquettes according to claim 10 or 11, wherein said quick calcium-magnesium compound comprises:

- fine particles of calcium-magnesium compound chosen from the fine particles rejected by screening in the production of pebbles of said quick calcium-magnesium compound, the calcium-magnesium filter dust of a concentration of 0 wt% to 90 wt% with respect to the total weight of said quick calcium-magnesium compound and;
- from 10 to 100 wt% of quicklime in the form of ground particles, with respect to the total weight of said quick calcium-magnesium compound.

13. Composition in the form of green briquettes according to any one of claims 10 to 12, having a BET specific surface area greater than or equal to 1 $m^2/g$, preferably greater than or equal to 1.2$m^2/g$, more preferentially greater than or equal to 1.4$m^2/g$.

14. Composition in the form of green briquettes according to any one of claims 10 to 13, having a porosity of greater than or equal to 20%, preferably greater than or equal to 22%, more preferentially greater than or equal to 24%.

15. Composition in the form of green briquettes according to any one of claims 10 to 14, having a high reactivity with water defined by a $t_{60}$ value of less than 10 min, preferentially less than 8 min, preferentially less than 6 min, and more preferentially less than 4 min.

16. Composition in the form of green briquettes according to any one of claims 10 to 15, further comprising a binder or lubricant, more particularly chosen from the group formed of binders of mineral origin, such as cements, clays, silicates, binders of plant or animal origin, such as celluloses, starches, gums, alginates, pectin, glues, binders of synthetic origin, such as polymers, waxes, liquid lubricants such as mineral or silicone oils, solid lubricants such as talc, graphite, paraffins, stearates, in particular calcium stearate, magnesium stearate and mixtures thereof, preferably calcium stearate and/or magnesium stearate, in an amount ranging between 0.1 and 1 wt%, preferably between 0.15 and 0.6 wt%, more preferentially between 0.2 and 0.5 wt% with respect to the total weight of said briquettes.

17. Composition in the form of fired briquettes, comprising at least one iron-based compound, said composition comprising at least 40 wt% equivalent of CaO+MgO with respect to the weight of said composition and having a Ca/Mg molar ratio of greater than or equal to 1, preferably greater than or equal to 2, more preferentially greater than or equal to 3, **characterised in that** said iron-based compound is present in an amount of at least 12 wt%, more preferably at least 20 wt%, preferably at least 30 wt%, more preferably at least 35 wt% of $Fe_2O_3$ equivalent with respect to the weight of said composition, said iron-based compound comprising at least 40% calcium ferrite, expressed by weight of $Fe_2O_3$ equivalent with respect to the total weight of said iron-based compound expressed by weight of $Fe_2O_3$ equivalent.

18. Composition in the form of fired briquettes according to claim 17, wherein said iron-based compound comprises at least 50 wt%, preferably at least 60 wt%, and even more preferentially at least 70 wt% of calcium ferrite with respect to the total weight of said iron-based compound.

19. Composition in the form of fired briquettes according to any one of claims 17 or 18, having a BET specific surface area greater than or equal to 0.4$m^2/g$, preferably greater than or equal to 0.6$m^2/g$, more preferentially greater than or equal to 0.8$m^2/g$.

20. Composition in the form of fired briquettes according to any one of claims 17 to 19, having a porosity of greater than or equal to 20%, preferably greater than or equal to 22%, more preferentially greater than or equal to 24%.

21. Composition in the form of fired briquettes according to any one of claims 17 to 20, having a high reactivity with water defined by a $t_{60}$ value of less than 10 min, preferentially less than 8 min, preferentially less than 6 min, and more preferentially less than 4 min.

22. Composition in the form of fired briquettes according to any one of claims 17 to 21, wherein the fired briquettes have a Shatter test index of less than 8%, preferably less than 6%, preferably less than 4% and more preferably less than 3%, in particular less than 2%, said Shatter text index being the weight percentage of the fines of less than 10mm generated after 4 drops of 2m starting from 10kg of product, the fines being quantified by means of sieving through a mesh screen of 10mm after the 4 drops of 2m.

23. Use of a composition in the form of green briquettes according to any one of claims 10 to 16 or in the form of fired briquettes according to any one of claims 17 to 22 in the steel industry, in particular in oxygen furnaces or in electric arc furnaces.

24. Use according to claim 23, in oxygen converters or electric arc furnaces, in a mixture with quick calcium-magnesium compounds or with quick calcium-magnesium compound pebbles.

25. Use of a composition in the form of green briquettes according to any one of claims 10 to 16 or in the form of fired briquettes according to any one of claims 17 to 22 in a method for refining molten metal, in particular for removing the phosphorous from molten metal and/or removing the sulphur from molten metal and/or reducing the loss of refined metal into the slag.

26. Use according to claim 25, comprising:

   - at least one step of introducing molten metal and possibly iron-based scraps into a vessel,
   - at least one step of introducing a composition in the form of green briquettes according to any one of claims 10 to 16 or in the form of fired briquettes according to any one of claims 17 to 22 into said vessel, preferably in the form of fired briquettes according to any one of claims 17 to 22,
   - at least one step of oxygen blowing in said vessel,
   - at least one step of forming slag with said composition of briquettes in said vessel,
   - at least one step of obtaining refined metal having a reduced content of phosphorous compounds and/or sulphurous compounds from the molten metal by removing phosphorous and/or removing sulphur, and/or increased refined metal,
   - at least one step of unloading said refined metal having a reduced content of phosphorous and/or sulphurous components and/or increased refined metal.

27. Use according to claim 26, further comprising a step of adding quicklime, preferably lumps of quicklime or compacts of quicklime, particularly tablets or briquettes of quicklime.

*Fig. 1*

*Fig.2*

*Fig.3*

*Fig. 4*

*Fig. 5*

EP 3 356 296 B1

**RÉFÉRENCES CITÉES DANS LA DESCRIPTION**

**Documents brevets cités dans la description**

- WO 2015007661 A
- US 5186742 A
- US 3771999 A
- US 3649248 A

**Littérature non-brevet citée dans la description**

- **BARNETT et al.** *Roll-press briquetting : Compacting fines to reduce waste-handling costs, powder and bulk engineering,* Octobre 2010, vol. 24 (10), 1-6
- *Process for dephosphorization of steel in Linz Donawitz converter (BOF converter) by pellet addition*